(19) Europäisches Patentamt / European Patent Office / Office européen des brevets

(11) **EP 4 516 852 B1**

(12) **EUROPEAN PATENT SPECIFICATION**

(45) Date of publication and mention
of the grant of the patent:
**03.06.2026  Bulletin 2026/23**

(21) Application number: **23194202.0**

(22) Date of filing: **30.08.2023**

(51) International Patent Classification (IPC):
**C08L 23/08** $^{(2025.01)}$      **C08F 210/16** $^{(2006.01)}$
**C08L 23/0807** $^{(2025.01)}$

(52) Cooperative Patent Classification (CPC):
(C-Sets available)
**C08L 23/0815; C08F 210/16;** C08L 2205/03;
C08L 2207/062; C08L 2207/20           (Cont.)

(54) **POLYETHYLENE BLEND FOR A FILM LAYER**

POLYETHYLENMISCHUNG FÜR EINE FOLIENSCHICHT

MÉLANGE DE POLYÉTHYLÈNE POUR UNE COUCHE DE FILM

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**05.03.2025  Bulletin 2025/10**

(73) Proprietor: **Borealis GmbH**
**1020 Vienna (AT)**

(72) Inventors:
• **WANG, Jingbo**
**4021 Linz (AT)**
• **FAWAZ, Joel**
**4021 Linz (AT)**
• **BORAGNO, Luca**
**4021 Linz (AT)**
• **MAYR, Michael**
**4021 Linz (AT)**

(74) Representative: **Kador & Partner Part mbB**
**Corneliusstraße 15**
**80469 München (DE)**

(56) References cited:
**EP-A1- 4 163 332         EP-A1- 4 163 335
WO-A1-2020/207940    WO-A1-2023/117419**

Remarks:
The file contains technical information submitted
after the application was filed and not included in this
specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 210/08, C08F 2500/12;**

**C08L 23/0815, C08L 23/10, C08L 23/0815;**
**C08L 23/0815, C08L 23/10, C08L 23/12,**
**C08L 23/12, C08L 23/0815;**
C08F 210/16, C08F 210/08, C08F 2500/12,
C08F 2500/07

**Description**

The present invention relates to a polyethylene composition comprising a multimodal high density polyethylene (HDPE) and a mixed-plastic-polyethylene recycling blend (PERB), to the use of the polyethylene composition in film applications and to a film comprising the polyethylene composition.

Polyolefins, in particular polyethylene and polypropylene are increasingly consumed in large amounts in a wide range of applications, including packaging for food and other goods. Due to their extensive use in packaging, these materials are a cause of environmental problems. Thus, there is need for recycling of plastic waste and intelligent reuse thereof.

It is thus important to form a circular economy that brings plastic waste back to a second life, i.e., to recycle it. This not only avoids leaving plastic waste in the environment but also recovers its value.

In addition, the European Commission confirmed in 2017 that it would focus on plastics production and use. The EU goals are that 1) by 2025 at least 55 % of all plastics packaging in the EU should be recycled and 2) by 2030 all plastic packaging placed in the EU market is reusable or easily recyclable. This pushes the plastics manufacturers to pursue solutions with recyclates.

Accordingly, it is of increasing importance to include polymers obtained from waste materials for the manufacturing of new products, i.e. wherein waste plastics (e.g. post-consumer recyclate (PCR)) can be turned into resources for new plastic products. Hence, environmental and economic aspects can be combined in recycling and reusing waste plastics material.

However, recycled plastics are normally inferior to virgin plastics in quality due to degradation, contamination and mixing of different plastics.

In addition, compositions containing recycled polyolefin materials normally have properties, which are much worse than the properties of compositions comprising virgin materials, unless the amount of recycled polyolefin added to the final composition is extremely low. For example, such materials often have poor mechanical properties and thus, they do not fulfil customer requirements.

Blending recycled plastics with virgin plastics is one solution for improving the quality of recycled plastics.

For example, WO 2021/122299 describes recycled polyethylene compositions for wire and cable applications, especially for jacketing materials, which have acceptable and constant ESCR (Environmental Stress Crack Resistance) performance (e.g. tensile properties), with Bell test failure time >1000 hours and good strain hardening (SH) performance with a strain hardening (SH) modulus of at least 15.0 MPa, and with other properties which are similar to blends of virgin polyethylene marketed for the purpose of cable jacketing. Such compositions are based on blends of recycled LDPE and virgin HDPEs, which are suitable for being used in the wire and cable field. WO2020/207940A1 discloses compositions for multilayer films comprising recycled LDPE and a multimodal terpolymer of ethylene and two alpha-olefin comonomers.

However, there is still need for compositions comprising recycled polyethylene material for use in other applications, such as in films for the preparation of packaging material. In particular, there is need for polyethylene compositions allowing the use of recycled polyethylene, which can be used for producing films with good properties, especially good mechanical properties such as a good balance of stiffness and toughness.

These compositions should allow the presence of higher amounts of recyclate.

The inventors have now found that a blend of a multimodal high density polyethylene (HDPE) having a specific polymer design and a polyethylene recyclate (i.e. a mixed-plastic-polyethylene recycling blend, PERB) provides films with an improved balance of stiffness and toughness. The polyethylene recyclate may be contained in an amount of more than 50 wt.-% in the composition.

**Description of the invention**

The present invention is therefore directed to a polyethylene composition comprising, based on the total weight of the polyethylene composition,

(I) from 5.0 to 45.0 wt.-% of a multimodal high density polyethylene (HDPE) having

i.1) a melt flow rate $MFR_5$ (ISO 1133, 190 °C, 5 kg) in the range of from 0.1 to 1.8 g/10 min,
i.2) a Flow Rate Ratio (FRR) of $MFR_{21}/MFR_5$ (ISO 1133, 190 °C, 5 and 21.6 kg) in the range of from 15.0 to 30.0, and
i.3) a density (ASTM D 792) in the range of from 942 to 954 $kg/m^3$, and

(II) from 55.0 to 95.0 wt.-% of a mixed-plastic-polyethylene recycling blend (PERB) having

ii.1) a melt flow rate $MFR_2$ (ISO 1133, 190 °C, 2.16 kg) in the range of from 0.1 to 1.2 g/10 min,

ii.2) a density (ASTM D 792) in the range of from 910 to 945 kg/m$^3$, and

ii.3) a total amount of ethylene units ($C_2$ units), based on the total weight of monomer units in the mixed-plastic-polyethylene recycling blend (PERB) and measured according to quantitative $^{13}C\{^1H\}$ NMR as described below, in the range of from 80.0 to 96.0 wt.-%.

Unexpectedly such a polyethylene composition may be used for films with an improved balance between stiffness and toughness.

The invention is therefore further directed to a film comprising at least one layer comprising the above described polyethylene composition.

The specific design of the multimodal high density polyethylene (HDPE) thereby allows the addition of high amounts of recyclate, i.e. of more than 50 wt.-% of the composition, and still provides films with good stiffness/toughness balance.

Thus, the multimodal high density polyethylene (HDPE) may be used to modify mixed-plastic-polyethylene recycling blends (PERB) by changing their stiffness/toughness ratio.

**Definitions**

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

For the purposes of the present description and of the subsequent claims, the term "mixed-plastic-polyethylene recycling blend (PERB)" indicates a polymer material that originates from recycled waste. In a specific and preferred embodiment the waste is a consumer waste (i.e. the PERB is a post-consumer recyclate), such waste may originate from conventional collecting systems such as those implemented in the European Union. Post-consumer waste material is characterized by a limonene content of from 0.1 to 500 mg/kg (as determined using solid phase microextraction (HS-SPME-GC-MS) by standard addition).

The mixed-plastic-polyethylene recycling blend generally includes predominantly units derived from ethylene apart from other polymeric ingredients of arbitrary nature. Such polymeric ingredients may for example originate from monomer units derived from alpha olefins such as propylene, 1-butene, 1-hexene, 1-octene, and the like, styrene derivatives such as vinylstyrene, substituted and unsubstituted acrylates, substituted and unsubstituted methacrylates.

Said polymeric materials can be identified in the mixed-plastic polyethylene recycling blend by means of quantitative $^{13}C\{^1H\}$ NMR measurements as described herein. In the quantitative $^{13}C\{^1H\}$ NMR measurement used herein and described below in the measurement methods different units in the polymeric chain can be distinguished and quantified. These units are ethylene units ($C_2$ units), units having 3, 4 and 6 carbons and units having 7 carbon atoms. Thereby, the units having 3 carbon atoms ($C_3$ units) can be distinguished in the NMR spectrum as isolated $C_3$ units (isolated $C_3$ units) and as continuous $C_3$ units (continuous $C_3$ units) which indicate that the polymeric material contains a propylene-based polymer. These continuous $C_3$ units can also be identified as iPP units.

The units having 3, 4, 6 and 7 carbon atoms describe units in the NMR spectrum which are derived from two carbon atoms in the main chain of the polymer and a short side chain or branch of 1 carbon atom (isolated $C_3$ unit), 2 carbon atoms ($C_4$ units), 4 carbon atoms ($C_6$ units) or 5 carbon atoms ($C_7$ units).

The units having 3, 4 and 6 carbon atoms (isolated $C_3$, $C_4$ and $C_6$ units) can derive either from incorporated comonomers (propylene, 1-butene and 1-hexene comonomers) or from short chain branches formed by radical polymerization.

The units having 7 carbon atoms ($C_7$ units) can be distinctively attributed to the mixed-plastic-polyethylene primary recycling blend (II) as they cannot derive from any comonomers. 1-heptene monomers are not used in copolymerization. Instead, the $C_7$ units represent presence of LDPE distinct for the recyclate. It has been found that in LDPE resins the amount of $C_7$ units is always in a distinct range. Thus, the amount of $C_7$ units measured by quantitative $^{13}C\{^1H\}$ NMR measurements can be used to calculate the amount of LDPE in a polyethylene composition.

Thus, the amounts of continuous $C_3$ units, isolated $C_3$ units, $C_4$ units, $C_6$ units and $C_7$ units are measured by quantitative $^{13}C\{^1H\}$ NMR measurements as described below, whereas the LDPE content is calculated from the amount of $C_7$ units as described below.

The total amount of ethylene units ($C_2$ units) is attributed to units in the polymer chain, which do not have short side chains of 1-5 carbon atoms, in addition to the units attributed to the LDPE (i.e. units which have longer side chains branches of 6 or more carbon atoms).

Conventionally further components such as fillers, including organic and inorganic fillers for example talc, chalk, carbon black, and further pigments such as $TiO_2$ as well as paper and cellulose may be present in the mixed-plastic-polyethylene recycling blend.

The term "natural" in the context of the present invention means that the components are of natural colour. This means that no pigments (including carbon black) are included in the components of the mixed-plastic-polyethylene recycling blend of the present invention.

## Detailed Description of Invention

### Polyethylene composition

The polyethylene composition of the present invention comprises, based on the total weight of the polyethylene composition,

(I) from 5.0 to 45.0 wt.-%, preferably from 10.0 to 45.0 wt.-% and more preferably from 20.0 to 40.0 wt.-% of a multimodal high density polyethylene (HDPE) and
(II) from 55.0 to 95.0 wt.-%, preferably from 55.0 to 90.0 wt.-% and more preferably from 60.0 to 80.0 wt.-% of a mixed-plastic-polyethylene recycling blend (PERB).

Preferably, the polyethylene composition consists of the components (I) and (II) in the abovedefined amounts. Thus, preferably, the amount of (I) and (II) and optionally one or more additive(s) add up to 100.0 wt.-%. Useful additives are additives that are generally used for polyolefin blending, for example, antioxidants, process stabilizers, UV-stabilizers, pigments, fillers, antistatic additives, antiblock agents, nucleating agents, acid scavengers as well as polymer processing agent (PPA). They may be contained in the polyethylene composition in a total amount of from 0.1 to 5.0 wt.-%, based on the total weight of the polyethylene composition.

### Multimodal high density polyethylene (HDPE)

It has been found that the multimodal high density polyethylene used in the polyethylene composition according to the present invention provides an improved material for film applications, which has very good mechanical properties in terms of a balance between stiffness and toughness.

Preferably, the HDPE is a Ziegler-Natta-catalyzed high density polyethylene. Ziegler-Natta-catalyzed high density polyethylene (znHDPE) is defined in this invention as high density polyethylene, which has been produced in the presence of a Ziegler-Natta catalyst system.

For the purpose of the present invention, "a multimodal high density polyethylene (HDPE)" generally comprises a polyethylene component (A) and a polyethylene component (B) which are produced in a multistage polymerization process. Generally, the HDPE is produced in an at least 2-stage sequential polymerization process, wherein the polyethylene component (A) is produced in a first polymerization step, and the polyethylene component (B) is then produced in the presence of the polyethylene component (A) in a subsequent polymerization step, yielding the HDPE, or vice versa, i.e. the polyethylene component (B) is produced in a first polymerization step and the polyethylene component (A) is then produced in the presence of the polyethylene component (B) in a subsequent polymerization step, yielding the HDPE.

HDPEs produced in a multistage process are also designated as "in-situ" or "reactor" blends. The resulting end product consists of an intimate mixture of the polymers from the two or more reactors, the different molecular weight distribution curves of these polymers together forming a molecular weight distribution curve having a broad maximum or two or more maxima, i.e. the end product is a multimodal polymer mixture.

For example, if a polymer is produced in a sequential multistage process, utilising reactors coupled in series and using different conditions in each reactor, the polymer (fractions) produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Term "multimodal" in context of high density polyethylene (HDPE) means herein multimodality with respect to melt flow rate (MFR) of at least the polyethylene components (A) and (B), i.e. the polyethylene components (A) and (B), have different MFR values. The multimodal high density polyethylene (HDPE) can have further multimodality between the polyethylene components (A) and (B) with respect to one or more further properties, like density, comonomer type and/or comonomer content, as will be described later below.

The multimodal HDPE used according to the present invention has a a melt flow rate MFR$_5$ (ISO 1133, 190 °C, 5 kg) in the range of from 0.1 to 1.8 g/10 min, preferably from 0.1 to 1.7 g/10 min, more preferably from 0.2 to 1.5 g/10 min and still more preferably from 0.2 to 1.3 g/10 min.

The melt flow rate MFR$_{21}$ (ISO 1133, 190 °C, 21.6 kg) of the multimodal HDPE is preferably in the range of from 3.0 to 26.0 g/10 min, more preferably from 4.0 to 25.0 g/10 min and still more preferably from 5.0 to 24.0 g/10 min.

The multimodal HDPE has a Flow Rate Ratio (FRR) of MFR$_{21}$/MFR$_5$ (ISO 1133, 190 °C, 5 and 21.6 kg) in the range of from 15.0 to 30.0, preferably from 17.0 to 29.0, more preferably from 18.0 to 28.0 and still more preferably from 19.0 to 27.0.

Further, the multimodal HDPE has a density (ASTM D 792) in the range of from 942 to 954 kg/m$^3$, preferably from 943 to 954 kg/m$^3$.

The multimodal HDPE may be an ethylene homopolymer or a copolymer, but is preferably an ethylene copolymer. Generally, "ethylene homopolymer" denotes a polymer comprising at least 98.0 wt.-% (such as at least 99.0 wt.-%, especially at least 99.5 wt.-%) ethylene monomer units. Thus, an ethylene homopolymer may comprise up to 2.0 wt.-% comonomer units, but preferably comprises only up to 1.0 wt.-%, more preferably only up to 0.5 wt.-%, like up to 0.2 wt.-% or even up to 0.1 wt.-% only. Generally, "ethylene copolymer" denotes a polymer the majority by weight of which derives from ethylene monomer units (i.e. at least 50.0 wt.-% ethylene, based on the total weight of the copolymer) and additionally comprises comonomer units. The comonomer content is preferably up to 10.0 % by mol, more preferably up to 5.0 % by mol.

The comonomer units are preferably C$_3$-C$_{12}$, more preferably C$_3$-C$_{10}$, alpha olefins, in particular C$_3$-C$_{10}$ alpha olefins selected from propene, 1-butene, 1-hexene, 1-octene and 4-methyl-pent-1-ene. The use of 1-hexene, 1-octene and 1-butene, or mixtures thereof, is particularly preferred, especially of 1-hexene and/or 1-butene, most preferably of 1-butene.

The HDPE is multimodal and therefore comprises at least two components. The multimodal HDPE preferably comprises at least a lower molecular weight polyethylene component (A) and a higher molecular weight polyethylene component (B). In one particularly preferable embodiment, the HDPE consists of the polyethylene components (A) and (B), and optional additives.

Higher molecular weight hereby means that the polyethylene component (B) has a higher molecular weight and thus lower MFR$_2$ than the polyethylene component (A). Lower molecular weight hereby means that the polyethylene component (A) has a lower molecular weight and thus higher MFR$_2$ than the polyethylene component (B).

The HDPE is preferably bimodal or trimodal. The multimodal HDPE most preferably comprises

(i) a polyethylene component (A) being a lower molecular weight ethylene homo- or copolymer component, and
(ii) a polyethylene component (B) being a higher molecular weight ethylene homo- or copolymer component.

Each of the polyethylene component (A) and the polyethylene component (B) may be an ethylene homopolymer or an ethylene copolymer. Preferably, at least one of the polyethylene component (A) and the polyethylene component (B) is an ethylene homopolymer. In some embodiments, one of the polyethylene component (A) and the polyethylene component (B) is an ethylene homopolymer, while the other component is an ethylene copolymer. Preferably, the polyethylene component (A) is an ethylene homopolymer and the polyethylene component (B) is an ethylene copolymer.

The polyethylene component (B) may comprise only one polyethylene fraction, and thus be unimodal, or it may comprise more polyethylene fractions and thus be multimodal. Preferably, the polyethylene component (B) consists of a single ethylene copolymer and is unimodal.

The polyethylene component (A) may comprise only one polyethylene fraction, and thus be unimodal, or it may comprise more polyethylene fractions and be multimodal. In some embodiments, the polyethylene component (A) comprises two polyethylene fractions, (A-1) and (A-2), and is bimodal. In some embodiments, the polyethylene component (A) comprises only one polyethylene fraction and is unimodal. Each of the polyethylene fractions (A-1) and (A-2) may be an ethylene homopolymer or an ethylene copolymer. Preferably, at least one, more preferably both, fractions are an ethylene homopolymer.

In some embodiments, the weight ratio of the polyethylene fraction (A-1) to the polyethylene fraction (A-2) in the polyethylene component (A) is in the range of from 30:70 to 70:30, preferably from 35:65 to 65:35 and more preferably from 40:60 to 60:40.

Preferably, the multimodal HDPE comprises, based on the total weight of the multimodal HDPE, at least

(i) from 30 to 70 wt.-% of a polyethylene component (A) with a density (ASTM D 792) in the range of from 960 to 980 kg/m$^3$ and a melt flow rate MFR$_2$ (ISO 1133, 190 °C, 2.16 kg) in the range of from 150 to 600 g/10 min, and
(ii) from 30 to 70 wt.-% of a polyethylene component (B) with a density in the range of from 910 to 950 kg/m$^3$ and a melt flow rate MFR$_2$ (ISO 1133, 190 °C, 2.16 kg) in the range of from 0.00001 to 0.05 g/10 min.

The weight ratio of polyethylene component (A) to the polyethylene component (B) in the multimodal HDPE is preferably in the range of from 30:70 to 70:30, more preferably from 35:65 to 65:35 and still more preferably from 40:60 to 60:40. In some embodiments the content may be from 35 to 50 wt.-% of the polyethylene component (A) and 50 to 65 wt.-% of the polyethylene component (B), such as 40 to 50 wt.-% of the polyethylene component (A) and 50 to 60 wt.-% of the polyethylene component (B), wherein the wt.-% values are based on the total weight of the multimodal HDPE.

In a particularly preferred embodiment, the wt.-% values for polyethylene components (A) and (B) add up to 100 wt.-%. It is to be understood that additives as defined above may be contained in both polyethylene components and in the respective HDPE.

The optional additives and the used amounts thereof are conventional in the field of polyethylene compositions. Examples of such additives are, among others, antioxidants, process stabilizers, UV-stabilizers, pigments, fillers, antistatic additives, antiblock agents, nucleating agents, acid scavengers as well as polymer processing agent (PPA).

*Embodiment (I)*

In one preferred embodiment, i.e. embodiment (I), the polyethylene component (A) is an ethylene homopolymer and the polyethylene component (B) is an ethylene copolymer.

Preferably, the polyethylene component (B) consists of a single ethylene copolymer and is unimodal. The polyethylene component (A) is an ethylene homopolymer, and it may consist of a single ethylene homopolymer. Alternatively, the polyethylene component (A) may be an ethylene homopolymer mixture comprising (e.g. consisting of) a first ethylene homopolymer fraction (A-1) and a second ethylene homopolymer fraction (A-2). Thus, the polyethylene component (A) may be unimodal or multimodal. Preferably, the polyethylene component (A) is an ethylene homopolymer consisting of a single ethylene homopolymer and is thus preferably unimodal.

In this embodiment of the present invention, the polyethylene component (A) preferably has an $MFR_2$ (ISO 1133, 190 °C, 2.16 kg) in the range of from 200 to 600 g/10 min, more preferably from 250 to 550 g/10 min, even more preferably from 300 to 500 g/10 min and still more preferably from 350 to 450 g/10 min.

The density (ASTM D 792) of the polyethylene component (A) of this embodiment is preferably in the range of from 960 to 980 kg/m$^3$, more preferably from 962 to 978 kg/m$^3$ and even more preferably from 965 to 975 kg/m$^3$.

The polyethylene component (B) of this embodiment preferably has an $MFR_2$ (ISO 1133, 190 °C, 2.16 kg) in the range of from 0.00005 to 0.05 g/10 min, more preferably from 0.0001 to 0.01 g/10 min and even more preferably from 0.0002 to 0.005 g/10 min, and preferably a density in the range of from 910 to 940 kg/m$^3$ and more preferably from 915 to 935 kg/m$^3$.

Preferred comonomers for the polyethylene component (B) are 1-butene, 1-hexene and 1-octene, more preferably 1-butene is used as comonomer for the polyethylene component (B) of this embodiment.

The multimodal HDPE of embodiment (I) may be produced by polymerization using conditions which create a multimodal (e.g. bimodal) polymer product ideally using a Ziegler Natta catalyst system.

Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) HDPE is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions (e.g. at least components (A) and (B)) is produced by producing the at least two polymer components in separate reaction stages, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc.. A suitable process is the Borstar PE process or the Borstar PE 3G process.

Preferably, the multimodal HDPE of embodiment (I) is a bimodal HDPE prepared in a two-stage polymerization process.

The first polymerization stage produces the ethylene homopolymer. The ethylene homopolymer is subsequently fed to the second polymerization stage. The second polymerization stage then produces an ethylene copolymer in the presence of the ethylene homopolymer from the first polymerization stage.

The first polymerization stage is preferably a slurry polymerization step. The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amounts of methane, ethane and/or butane.

The temperature in the first polymerization stage is preferably from 60 to 115°C, preferably from 80 to 110°C. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the resultant polymer. The amount of hydrogen needed to reach the desired MFR depends on the catalyst used and the polymerization conditions.

In the second polymerization stage, ethylene is polymerized to an ethylene copolymer, in the presence of the catalyst, at least one alpha olefin comonomer and the ethylene homopolymer produced in the first polymerization stage. It will thus be appreciated that the second polymerization stage generates an ethylene copolymer, which combines with the ethylene homopolymer from the first polymerization stage, to form the multimodal HDPE of embodiment (I).

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range of from 60 to 115 °C (e.g. 70 to 110 °C), the reactor pressure will generally be in the range of from 10 to 25 bar, and the residence time will generally be 1 to 8 hours. The gas used will commonly be a non-reactive gas such as nitrogen or low boiling point hydrocarbons such as propane together with monomer (e.g. ethylene).

The split between the first polymerization stage and the second polymerization stage (i.e. between the slurry polymerization and the gas phase polymerization) is typically of from 30:70 to 70:30, more preferably from 35:65 to 65:35, most preferably from 40:60 to 60:40.

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 45 to 75 °C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount, which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases, it is necessary to introduce so much cocatalyst into the prepolymerization stage that a sufficient polymerization reaction is obtained therein. It is understood within the scope of the invention, that the amount of polymer produced in the prepolymerization typically lies within 1 - 5 wt.-% in respect to the final multimodal HDPE. This amount is often counted as part of the fraction (A-1) (resp. component (A) if no fraction (A-2) is present).

The polymerization for embodiment (I) is preferably conducted in the presence of a Ziegler-Natta polymerization catalyst system. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or an $MgCl_2$ based support. Preferably, the support is silica or a $MgCl_2$ based support.

Particularly preferred Ziegler-Natta catalysts are such as described in EP-A-1378528.

In the production of the multimodal HDPE of the present invention, preferably a compounding step is applied, wherein the composition of the base resin, i.e. the blend, which is typically obtained as a base resin powder from the reactor, is extruded in an extruder and then pelletized to polymer pellets in a manner known in the art.

*Embodiment (II)*

In another preferred embodiment, i.e. embodiment (II), the polyethylene component (A) is an ethylene homopolymer and the polyethylene component (B) is an ethylene copolymer.

Preferably, the polyethylene component (B) consists of a single ethylene copolymer and is unimodal. The polyethylene component (A) is an ethylene homopolymer, and it may consist of a single ethylene homopolymer. Alternatively, the polyethylene component (A) may be an ethylene homopolymer mixture comprising (e.g. consisting of) a first ethylene homopolymer fraction (A-1) and a second ethylene homopolymer fraction (A-2). Thus, the polyethylene component (A) may be unimodal or multimodal. Preferably, the polyethylene component (A) is an ethylene homopolymer mixture comprising, preferably consisting of, a first ethylene homopolymer fraction (A-1) and a second ethylene homopolymer fraction (A-2) and is thus preferably bimodal.

In embodiment (II), the polyethylene component (A) preferably has an $MFR_2$ (ISO 1133, 190 °C, 2.16 kg) in the range of from 150 to 500 g/10 min, more preferably from 200 to 450 g/10 min, even more preferably from 220 to 400 g/10 min and still more preferably from 250 to 380 g/10 min.

The density (ASTM D 792) of the polyethylene component (A) of this embodiment is preferably in the range of from 960 to 980 kg/m$^3$, more preferably from 962 to 978 kg/m$^3$ and even more preferably from 965 to 975 kg/m$^3$.

It is further preferred that the polyethylene component (A) consists of two fractions, i.e. a first ethylene homopolymer fraction (A-1) and a second ethylene homopolymer fraction (A-2). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably, fraction (A-1) is produced first.

The $MFR_2$ and/or the density of fractions (A-1) and (A-2) may be the same or may be different from each other.

The ethylene homopolymer fraction (A-1) preferably has an $MFR_2$ (ISO 1133, 190 °C, 2.16 kg) in the range of from 100 to 400 g/10 min, more preferably from 150 to 350 g/10 min, even more preferably from 180 to 330 g/10 min and most preferably from 200 to 300 g/10 min.

The ethylene homopolymer fraction (A-2) preferably has an $MFR_2$ (ISO 1133, 190 °C, 2.16 kg) in the range of from 250 to 1000 g/10 min, more preferably from 300 to 800 g/10 min, even more preferably from 320 to 600 g/10 min and most preferably from 350 to 450 g/10 min.

Preferably, the ethylene homopolymer fraction (A-1) has a lower melt flow rate $MFR_2$, preferably lower by 50 to 500 g/10 min, than the second ethylene homopolymer fraction (A-2).

The density (ASTM D 792) of the ethylene homopolymer fraction (A-1) and the ethylene homopolymer fraction (A-2) is preferably in the range of from 960 to 980 kg/m$^3$, more preferably from 962 to 978 kg/m$^3$ and even more preferably from 965 to 975 kg/m$^3$.

Preferably, the density of fraction (A-2) is similar or higher than the density of fraction (A-1).

The polyethylene component (B) preferably has an $MFR_2$ (ISO 1133, 190 °C, 2.16 kg) in the range of from 0.00001 to 0.01 g/10 min, more preferably from 0.00002 to 0.005 g/10 min and even more preferably from 0.00005 to 0.001 g/10 min.

The density (ASTM D 792) of the polyethylene component (B) is preferably in the range of from 915 to 950 kg/m$^3$ and more preferably from 920 to 945 kg/m$^3$.

As described above polyethylene component (B) is an ethylene copolymer. Preferred ethylene copolymers employ alpha-olefins (e.g. C3-12 alpha-olefins) as comonomers. Examples of suitable alpha-olefins include 1-butene, 1-hexene and 1-octene. 1-Butene is an especially preferred comonomer.

The multimodal HDPE of embodiment (II) may be produced by polymerization using conditions which create a multimodal polymer product ideally using a Ziegler Natta catalyst system, as described above for the multimodal HDPE of embodiment (I).

Thus, the multimodal HDPE of embodiment (II) can be produced in a 2-stage process, as described above for the multimodal HDPE of embodiment (I).

The polyethylene component (A) of the multimodal HDPE of embodiment (II) preferably consists of ethylene homopolymer fractions (A-1) and (A-2). Accordingly, the multimodal HDPE can be produced with a 3-stage process, preferably comprising a first slurry reactor (loop reactor 1), whereby the first slurry loop reactor is connected in series with another slurry reactor (loop reactor 2), so that the first ethylene homopolymer fraction (A-1) produced in the loop reactor 1 is fed to the loop reactor 2, wherein the second ethylene homopolymer fraction (A-2) is produced in the presence of the first fraction (A-1). It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

The loop reactor 2 is usually connected in series to a gas phase reactor (GPR), so that the first ethylene homopolymer component (A) (comprising ethylene homopolymer fractions (A-1) and (A-2)) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced. Otherwise the conditions in both loop reactors are usually similar and as described above for embodiment (I). The conditions in the GPR reactor are also as described above.

Such a process is described inter alia in WO 2016/198273, WO 2021009189, WO 2021009190, WO 2021009191 and WO 2021009192. Full details of how to prepare suitable multimodal polymers can be found in these references.

The split between the first polymerization stage (A-1) and the second polymerization stage (A2) (i.e. between the two slurry polymerizations) is typically from 30:70 to 70:30, more preferably from 35:65 to 65:35, most preferably from 40:60 to 60:40.

The split between the first polymerization stage and the second polymerization stage taken together (A) and the third polymerization stage (B) (i.e. between the two slurry polymerizations and the gas phase polymerization) is also typically from 30:70 to 70:30, more preferably from 35:65 to 65:35, most preferably from 40:60 to 60:40.

The multimodal HDPE of embodiment (II) is therefore preferably produced in a loop - loop - gas cascade. Such polymerization steps may be preceded by a prepolymerization step, as described above for the multimodal HDPE of embodiment (I).

### Mixed-plastic-polyethylene recycling blend (PERB)

In addition to the multimodal HDPE, the polyethylene composition of the present invention comprises a mixed-plastic-polyethylene recycling blend (PERB).

It is the essence of the present invention that this recycling blend is obtained from a post-consumer waste stream and/or a post-industrial waste stream, preferably from a post-consumer waste stream.

According to the present invention the mixed-plastic-polyethylene recycling blend (PERB) is generally a blend, wherein at least 90 wt.-%, preferably at least 95 wt.-%, more preferably 100 wt.-% of the mixed-plastic-polyethylene recycling blend (PERB) originate from post-consumer waste, such as from conventional collecting systems (curb-side collection), such as those implemented in the European Union, and/or post-industrial waste, preferably from post-consumer waste.

Said post-consumer waste may be identified by its limonene content. It is preferred that the post-consumer waste has a limonene content of from 0.1 to 500 mg/kg. As it is originating from post-consumer waste also the mixed-plastic-polyethylene recycling blend (PERB) may comprise limonene in a content from 0.1 to 500 mg/kg.

The mixed-plastic-polyethylene recycling blend (PERB) comprises a total amount of ethylene units ($C_2$ units) in the range of from 80.0 to 96.0 wt.-%, preferably from 82.5 to 95.5 wt.-%, more preferably from 85.0 to 95.5 wt.-% and most preferably from 87.5 to 95.0 wt.-%.

Preferably, the mixed-plastic-polyethylene recycling blend (PERB) comprises a total amount of continuous units having 3 carbon atoms corresponding to polypropylene (continuous $C_3$ units) in the range of from 0.2 to 6.5 wt.-%, more preferably from 0.4 to 6.0 wt.-%, still more preferably from 0.6 to 5.5 wt.-% and most preferably from 0.75 to 5.0 wt.-%.

The total amounts of $C_2$ units and continuous $C_3$ units thereby are based on the total weight amount of monomer units in the mixed-plastic-polyethylene recycling blend (PERB) and are measured according to quantitative $^{13}C\{^1H\}$ NMR measurement, as described herein.

In addition to $C_2$ units and continuous $C_3$ units the mixed-plastic-polyethylene recycling blend (PERB) can further comprise units having 3, 4, 6 or 7 or more carbon atoms so that the mixed-plastic-polyethylene recycling blend (PERB) overall can comprise ethylene units and a mix of units having 3, 4, 6 and 7 or more carbon atoms.

The mixed-plastic-polyethylene recycling blend (PERB) preferably comprises one or more in any combination, preferably all of:

a) a total amount of units having 3 carbon atoms as isolated $C_3$ units (isolated $C_3$ units) in the range of from 0.00 to 0.50 wt.-%, more preferably from 0.00 to 0.40 wt.-%, still more preferably from 0.00 to 0.30 wt.-% and most preferably from 0.00 to 0.25 wt.-%;
b) a total amount of units having 4 carbon atoms ($C_4$ units) in the range of from 0.50 to 5.00 wt.-%, more preferably from 0.75 to 4.00 wt.-%, still more preferably from 1.00 to 3.50 wt.-% and most preferably from 1.25 to 3.00 wt.-%;
c) a total amount of units having 6 carbon atoms ($C_6$ units) in the range of from 0.50 to 7.50 wt.-%, more preferably from 0.75 to 6.50 wt.-%, still more preferably from 1.00 to 5.50 wt.-% and most preferably from 1.25 to 5.00 wt.-%;
d) a total amount of units having 7 carbon atoms ($C_7$ units) in the range of from 0.20 to 2.50 wt.-%, more preferably from 0.30 to 2.00 wt.-%, still more preferably from 0.40 to 1.50 wt.-% and most preferably from 0.45 to 1.25 wt.-%, and
e) an LDPE content in the range of from 20.0 to 65.0 wt.-%, more preferably from 25.0 to 62.5 wt.-%, still more preferably from 30.0 to 60.0 wt.-% and most preferably from 32.0 to 55.0 wt.-%.

The total amounts of $C_2$ units, continuous $C_3$ units, isolated $C_3$ units, $C_4$ units, $C_6$ units, $C_7$ units and LDPE content thereby are based on the total weight of monomer units in the mixed-plastic-polyethylene recycling blend (PERB) and are measured and calculated according to quantitative $^{13}C\{^1H\}$ NMR measurement, as described herein.

Preferably, the total amount of units, which can be attributed to comonomers (i.e. isolated $C_3$ units, $C_4$ units and $C_6$ units), in the mixed-plastic-polyethylene recycling blend (PERB) is in the range of from 4.00 to 20.00 wt.-%, more preferably from 4.50 to 17.50 wt.-%, still more preferably from 4.75 to 15.00 wt.-% and most preferably from 5.00 to 12.50 wt.-%, and is measured according to quantitative $^{13}C\{^1H\}$ NMR measurement.

The mixed-plastic-polyethylene recycling blend (PERB) has

a) a melt flow rate $MFR_2$ (ISO 1133, 2.16 kg, 190 °C) in the range of from 0.1 to 1.2 g/10 min, preferably from 0.2 to 1.1 g/10 min, and
b) a density (ASTM D 792) in the range of from 910 to 945 kg/m$^3$, preferably from 915 to 942 kg/m$^3$, more preferably from 918 to 940 kg/m$^3$.

In one embodiment, the mixed-plastic-polyethylene recycling blend (PERB) does not comprise carbon black. In another embodiment, the mixed-plastic-polyethylene recycling blend (PERB) does not comprise any pigments other than carbon black.

The mixed-plastic-polyethylene recycling blend (PERB) preferably is a natural mixed-plastic-polyethylene recycling blend (PERB).

The mixed-plastic-polyethylene recycling blend (PERB) may also include:

- 0 to 10.0 wt.-% of units derived from alpha olefin(s),
- 0 to 3.0 wt.-% of stabilizers,
- 0 to 3.0 wt.-% of talc,
- 0 to 3.0 wt.-% of chalk,
- 0 to 6.0 wt.-% of further components,

wherein all percentages are based on the total weight of the mixed-plastic-polyethylene recycling blend (PERB).

The mixed-plastic-polyethylene recycling blend (PERB) preferably has one or more, more preferably all, of the following properties in any combination:

a) an $MFR_5$ (ISO 1133, 5.0 kg, 190 °C) in the range of from 1.5 to 5.0 g/10 min, more preferably from 2.0 to 4.0 g/10 min;
b) an $MFR_{21}$ (ISO 1133, 21.6 kg, 190 °C) in the range of from 20.0 to 50.0 g/10 min, more preferably from 25.0 to 45.0 g/10 min;
c) a polydispersity index PI in the range of from 1.0 to 3.5 s$^{-1}$, more preferably from 1.3 to 3.0 s$^{-1}$;
d) a shear thinning index $SHI_{2.7/210}$ in the range of from 15 to 40, more preferably from 20 to 35;
e) a complex viscosity at the frequency of 300 rad/s, eta300, in the range of from 500 to 750 Pa•s, more preferably from 550 to 700 Pa•s;
f) a complex viscosity at the frequency of 0.05 rad/s, eta0.05, in the range of from 15000 to 30000 Pa•s, more preferably from 15500 to 27500 Pa•s;
g) a strain hardening modulus, SH modulus, in the range of from 12.5 to 20.0 MPa, more preferably from 13.0 to 17.5 MPa.

The determination methods used for these parameters are described herein below.

It is preferred that the mixed-plastic-polyethylene recycling blend (PERB) has a comparatively low gel content, especially in comparison to other mixed-plastic-polyethylene recycling blends. The mixed-plastic-polyethylene recycling blend (PERB) preferably has a gel content for gels with a size in the range of from above 600 $\mu$m to 1000 $\mu$m of not more than 1000 gels/m$^2$, more preferably not more than 850 gels/m$^2$. The lower limit of the gel content for gels with a size in the range of from above 600 $\mu$m to 1000 $\mu$m is usually 100 gels/m$^2$, preferably 150 gels/m$^2$.

Still further, the mixed-plastic-polyethylene recycling blend (PERB) preferably has a gel content for gels with a size of from above 1000 $\mu$m of not more than 200 gels/m$^2$, more preferably not more than 150 gels/m$^2$. The lower limit of the gel content for gels with a size of from above 1000 $\mu$m is usually 10 gels/m$^2$, preferably 14 gels/m$^2$.

Mixed-plastic-polyethylene blend(s) (PERB) as used herein are commercially available. One suitable recyclate is e.g. available from Ecoplast Kunststoffrecycling GmbH under the brand names NAV 101 and NAV 102.

As described above, the polyethylene composition according to the present invention provides an improved balance between stiffness and toughness to films comprising the blend.

The specific design of the multimodal high density polyethylene (HDPE) thereby allows the addition of higher amount of recyclate, i.e. of more than 50 wt.-% in the composition, and still provides films with a good stiffness/toughness balance.

**Film**

The present invention is therefore further directed to a film comprising the above described polyethylene composition.

The film according to the present invention comprises at least one layer comprising the above defined polyethylene composition, in any of the embodiments depicted above. The film can be a monolayer film comprising the above defined polyethylene composition or a multilayer film, wherein at least one layer comprises the above defined polyethylene composition. The terms "monolayer film" and multilayer film" have well known meanings in the art.

Preferably, the film or the at least one layer of the film comprises at least 90 wt.-% of the above defined polyethylene composition, more preferably at least 95 wt.-%, still more preferably at least 99 wt.-% and even more preferably the film or the at least one layer consists of the above defined polyethylene composition.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled person is aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

Preferred films according to the present invention are monolayer blown films.

The monolayer film of the present invention may have a thickness in the range of from 20 to 120 $\mu$m, preferably from 30 to 100 $\mu$m and more preferably from 35 to 80 $\mu$m.

The films according to the present invention are preferably not stretched in the machine or transverse or biaxial direction, i.e. are unoriented.

The films according to the present invention are characterized by good mechanical properties, in particular by a good stiffness/toughness balance.

The films according to the present invention have a good stiffness (tensile modulus measured on a 40 $\mu$m monolayer test blown film according to ISO 527-3 at 23 °C), preferably of at least 290 MPa, also preferably in the range of from 290 to 600 MPa, more preferably from 300 to 500 MPa in both directions, i.e. in machine (MD) as well as in transverse (TD) direction.

The films according to the present invention are further characterized by a good toughness, i.e. a Dart Drop Impact (DDI) determined according to ISO 7765-1:1988 on a 40 $\mu$m monolayer test blown film preferably of more than 70 g, also preferably in the range of from 71 to 100 g, more preferably from 75 to 100 g.

The films according to the present invention have an excellent balance between stiffness and toughness, determined as the ratio of the Tensile Modulus (TM) in machine direction (MD) and the Dart Drop Impact (DDI) TM(MD)/DDI, preferably of less than 5 MPa/g, also preferably in the range of from 2.5 to 4.9 MPa/g, more preferably from 3.0 to 4.7 MPa/g.

The films according to the present invention may be used in various packaging applications, in particular for secondary packaging, which do not require a food approval or even for primary packaging for non-food products.

Furthermore the films according to the present invention may be used as a layer in multilayer polyethylene based blown films, preferably as core layer in multilayer polyethylene based blown films.

**Uses**

The present invention is also directed to the use of the film in any of the embodiments described above as packaging material, preferably for non-food products.

Further, the present invention also relates to the use of a multimodal high density polyethylene (HDPE) having

i.1) a melt flow rate $MFR_5$ (ISO 1133, 190 °C, 5 kg) in the range of from 0.1 to 1.8 g/10 min,
i.2) a Flow Rate Ratio (FRR) of $MFR_{21}/MFR_5$ (ISO 1133, 190 °C, 5 and 21.6 kg) in the range of from 15.0 to 30.0, and
i.3) a density (ASTM D 792) in the range of from 942 to 954 $kg/m^3$

for modifying mechanical properties of a mixed-plastic-polyethylene recycling blend (PERB).

Preferably, the mechanical properties are modified in such a way that films comprising the mixed-plastic-polyethylene recycling blend (PERB) and the HDPE have a changed stiffness/toughness ratio. More preferably, the films have a balance between stiffness and toughness, determined as the ratio of the Tensile Modulus (TM) in machine direction (MD) and the Dart Drop Impact (DDI) TM(MD)/DDI, of less than 5 MPa/g, or in the range of from 2.5 to 4.9 MPa/g, most preferably from 3.0 to 4.7 MPa/g.

The HDPE and PERB and their amounts may be in any of the embodiments described herein for the polyethylene composition.

Use of the HDPE as a modifier for mixed-plastic-polyethylene recycling blend (PERB), preferably the mixed-plastic-polyethylene recycling blend (PERB) as defined herein, allows for the preparation of polyethylene compositions with excellent balance between stiffness and toughness in films comprising the PERB and HDPE.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$logA = x \cdot logB + (1 - x) \cdot logC$$

$$C = 10^{\wedge \frac{(logA - x.logB)}{(1-x)}}$$

*For Component B:*

B = $MFR_2$ of Component (A)
C = $MFR_2$ of Component (B)
A = final $MFR_2$ (mixture) of multimodal polyethylene copolymer (P)
X = weight fraction of Component (A).

*For Fraction (A-2):*

B = $MFR_2$ of 1st fraction (A-1)
C = $MFR_2$ of 2nd fraction (A-2)
A = final $MFR_2$ (mixture) of loop polymer (= Component (A))
X = weight fraction of the 1st fraction (A-1).

**Density**

Density of the polymer was measured according to ASTM D 792, Method B (density by balance at 23°C) on compression moulded specimen prepared according to EN ISO 1872-2 (February 2007) and is given in $kg/m^3$.

**Comonomer contents in HDPEs:**

**Quantification of microstructure by NMR spectroscopy**

Quantitative nuclear-magnetic resonance (NMR) spectroscopy was used to quantify the comonomer content of the polymers.
Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal ($\delta+$) at 30.00 ppm.
The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I_{\alpha\alpha B4B4}$$

The amount non consecutively incorporated 1-hexene in EEHEHEE sequences was quantified using the integral of the ββB4B4 site at 24.7 ppm accounting for the number of reporting sites per comonomer:

$$HEH = 2 * I_{\beta\beta B4B4}$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128.

Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239.

Griffin, J.M., Tripon, C., Samoson, A., Filip, C., and Brown, S.P., Mag. Res. in Chem. 2007 45, S1, S198.

Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.

Busico, V., Cipullo, R., Monaco, G., Vacatello, M., Segre, A.L., Macromoleucles 30 (1997) 6251.

Zhou, Z., Kuemmerle, R., Qiu, X., Redwine, D., Cong, R., Taha, A., Baugh, D. Winniford, B., J. Mag. Reson. 187 (2007) 225.

Busico, V., Carbonniere, P., Cipullo, R., Pellecchia, R., Severn, J., Talarico, G., Macromol. Rapid Commun. 2007, 28, 1128.

Resconi, L., Cavallo, L., Fait, A., Piemontesi, F., Chem. Rev. 2000, 100, 1253.

Dart drop strength (DDI): Impact resistance by free-falling dart method

The DDI was measured according to ISO 7765-1:1988 / Method A from the films (non-oriented films and laminates) as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

_Standard conditions:_

Conditioning time: > 96 h
Test temperature: 23 °C
Dart head material: phenolic
Dart diameter: 38 mm
Drop height: 660 mm

_Results:_

Impact failure weight - 50% [g]

**Tensile modulus**

Tensile modulus (E-Mod (MPa)) was measured in machine and/or transverse direction according to ISO 527-3 on film samples prepared as described under the Film Sample preparation with film thickness of 40 $\mu$m and at a cross head speed of 1 mm/min for the modulus.

**Quantification of C2, iPP (continuous C3), LDPE and polyethylene short chain branches in polyethylene based recyclates**

Quantitative $^{13}$C{$^1$H} NMR spectra were recorded in the solution-state using a Bruker AvanceIII 400MHz NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in 3 ml of _1,2_-tetrachloroethane-$d_2$ (TCE-$d_2$) along with chromium-(III)-acetylacetonate (Cr(acac)$_3$) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra.

Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), $\gamma$-carbons (g 29.6 ppm) the 4s and the threeB4 carbon (to be compensated for later on) is taken between 30.9 ppm and 29.3 ppm excluding the T$\beta\beta$ from polypropylene. The amount of C2 related carbons was quantified using all mentioned signals according to the following equation:

$$fC_{C2total} = (Iddg - ItwoB4) + (IstarB1*6) + (IstarB2*7) + (ItwoB4*9) + I(threeB5*10) + ((IstarB4plus-ItwoB4-IthreeB5)*7) + (I3s*3)$$

Characteristic signals corresponding to the presence of polypropylene (iPP, continuous C3)) were observed at 46.7 ppm, 29.0 ppm and 22.0 ppm. The amount of PP related carbons was quantified using the integral of S$\alpha\alpha$ at 46.6 ppm:

$$fC_{PP} = Is\alpha\alpha * 3$$

The weight percent of the C2 fraction and the polypropylene can be quantified according following equations:

$$wt_{C2fraction} = fC_{C2total} * 100 / (fC_{C2total} + fC_{PP})$$

$$wt_{PP} = fC_{PP} * 100 / (fC_{C2total} + fC_{PP})$$

Characteristic signals corresponding to various short chain branches were observed and their weight percentages quantified as the related branch would be an alpha-olefin, starting by quantifying the weight fraction of each:

$$fwtC2 = fC_{C2total} - ((IstarB1*3) - (IstarB2*4) - (ItwoB4*6) - (IthreeB5*7)$$

$$fwtC3 \text{ (isolated C3)} = IstarB1*3$$

$$fwtC4 = IstarB2*4$$

$$fwtC6 = ItwoB4*6$$

$$fwtC7 = IthreeB5*7$$

Normalisation of all weight fractions leads to the amount of weight percent for all related branches:

$$fsum_{wt.-\%total} = fwtC2 + fwtC3 + fwtC4 + fwtC6 + fwtC7 + fC_{PP}$$

$$wtC2total = fwtC2 * 100 / fsum_{wt.-\%total}$$

$$wtC3total = fwtC3 * 100 / fsum_{wt.-\%total}$$

$$wtC4total = fwtC4 * 100 / fsum_{wt.-\%total}$$

$$wtC6total = fwtC6 * 100 / fsum_{wt.-\%total}$$

$$wtC7total = fwtC7 * 100 / fsum_{wt.-\%total}$$

The content of LDPE can be estimated assuming the B5 branch, which only arises from ethylene being polymerized under high pressure process, being almost constant in LDPE. We found the average amount of B5 if quantified as C7 at 1.46 wt.-%. With this assumption it is possible to estimate the LDPE content within certain ranges (approximately between 20 wt.-% and 80 wt.-%), which are depending on the SNR ratio of the threeB5 signal:

$$wt.-\%LDPE = wtC7total * 100 / 1.46$$

References:

| | |
|---|---|
| zhou07 | Zhou, Z., Kuemmerle, R., Qiu, X., Redwine, D., Cong, R., Taha, A., Baugh, D. Winniford, B., J. Mag. Reson. 187 (2007) 225. |
| busico07 | Busico, V., Carbonniere, P., Cipullo, R., Pellecchia, R., Severn, J., Talarico, G., Macromol. Rapid Commun. 2007, 28, 1128. |
| singh09 | Singh, G., Kothari, A., Gupta, V., Polymer Testing 28 5 (2009), 475. |
| randall89 | J. Randall, Macromol. Sci., Rev. Macromol. Chem. Phys. 1989, C29, 201. |
| brandolini00 | A. J. Brandolini, D. D. Hills, NMR Spectra of Polymers and Polymer Additives, Marcel Dekker Inc., 2000. |

**Rheological measurements**

Dynamic Shear Measurements (frequency sweep measurements)

The characterisation of melt of polymer composition or polymer as given above or below in the context by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta"$ and the loss tangent, tan $\delta$ which can be expressed as follows:

$$G' = \frac{\sigma_0}{\gamma_0} \cos\delta \text{ [Pa]} \qquad (3)$$

$$G'' = \frac{\sigma_0}{\gamma_0} \sin\delta \text{ [Pa]} \qquad (4)$$

$$G^* = G' + iG'' \text{ [Pa]} \qquad (5)$$

$$\eta^* = \eta' - i\eta'' \text{ [Pa.s]} \qquad (6)$$

$$\eta' = \frac{G''}{\omega} \text{ [Pa.s]} \qquad (7)$$

$$\eta'' = \frac{G'}{\omega} \text{ [Pa.s]} \qquad (8)$$

The determination of so-called Shear Thinning Index, which correlates with MWD and is independent of Mw, is done as described in equation 9.

$$SHI_{(x/y)} = \frac{\text{Eta* for } (G^* = x \text{ kPa})}{\text{Eta* for } (G^* = y \text{ kPa})} \qquad (9)$$

For example, the $SHI_{(2.7/210)}$ is defined by the value of the complex viscosity, in Pa s, determined for a value of $G^*$ equal to 2.7 kPa, divided by the value of the complex viscosity, in Pa s, determined for a value of $G^*$ equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300rad/s}$ (eta$^*_{300rad/s}$) is used as abbreviation for the complex viscosity at the frequency of 300 rad/s and $\eta^*_{0.05rad/s}$ (eta$^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index EI(x). The elasticity index EI(x) is the value of the storage modulus (G') determined for a value of the loss modulus (G") of x kPa and can be described by equation 10.

$$EI(x) = G' \, for \, (G'' = x \, kPa) \text{ [Pa]} \qquad (10)$$

For example, the EI(5kPa) is the defined by the value of the storage modulus (G'), determined for a value of G" equal to 5 kPa.

The polydispersity index, PI, is defined by equation 11.

$$PI = \frac{10^5}{G'(\omega_{COP})}, \qquad \omega_{COP} = \omega \, for \, (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362
[2] The influence of molecular structure on some rheological properties of polyethylene", Heino, E.L., Borealis Polymers Oy, Porvoo, Finland, Annual Transactions of the Nordic Rheology Society, 1995.).
[3] Definition of terms relating to the non-ultimate mechanical properties of polymers, Pure & Appl. Chem., Vol. 70, No. 3, pp. 701-754, 1998.

## Strain hardening (SH) modulus

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, $\lambda$, is between 8 and 12.

The true strain, $\lambda$, is calculated from the length, l (mm), and the gauge length, l0 (mm), as shown by Equation 1.

$$\lambda = \frac{l}{l_0} = 1 + \frac{\Delta l}{l_0} \qquad (1)$$

where $\Delta l$ is the increase in the specimen length between the gauge marks, (mm). The true stress, $\sigma_{true}$ (MPa), is calculated according to formula 2, assuming conservation of volume between the gauge marks:

$$\sigma_{true} = \sigma_n \lambda \qquad (2)$$

where $\sigma_n$ is the engineering stress.

The Neo-Hookean constitutive model (Equation 3) is used to fit the true strain- true stress data from which <Gp> (MPa) for $8 < \lambda < 12$ is calculated.

$$\sigma_{\text{true}} = \frac{<Gp>}{20}\left(\lambda^2 - \frac{1}{\lambda}\right) + C \qquad (3)$$

where C is a mathematical parameter of the constitutive model describing the yield stress extrapolated to $\lambda = 0$.

Initially five specimens are measured. If the variation coefficient of <Gp> is greater than 2.5 %, then two extra specimens are measured. In case straining of the test bar takes place in the clamps the test result is discarded.

The PE granules of materials were compression molded in sheets of 0.30 mm thickness according to the press parameters as provided in ISO 17855-2.

After compression molding of the sheets, the sheets were annealed to remove any orientation or thermal history and maintain isotropic sheets. Annealing of the sheets was performed for 1 h in an oven at a temperature of $(120 \pm 2)$ °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given in Table A.

### Table A: Dimensions of Modified ISO 37:1994 Type 3

| Dimension | | Size (mm) |
|---|---|---|
| L | start length between clamps | 30.0 +/- 0.5 |
| l0 | Gauge length | 12.5 +/- 0.1 |
| l1 | Prismatic length | 16.0 +/- 1.0 |
| l3 | Total length | 70 |
| R1 | Radius | 10.0 +/- 0.03 |
| R2 | Radius | 8.06 +/- 0.03 |

(continued)

| Dimension | | Size (mm) |
|---|---|---|
| b1 | Prismatic width | 4.0 +/- 0.01 |
| b2 | Clamp width | 20.0 +/- 1.0 |
| h | Thickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.

1. The following procedure is performed on a universal tensile testing machine having controlled temperature chamber and non-contact extensometer:

2. Condition the test specimens for at least 30 min in the temperature chamber at a temperature of (80 ± 1) °C prior to starting the test.

3. Clamp the test piece on the upper side.

4. Close the temperature chamber.

5. Close the lower clamp after reaching the temperature of (80 ± 1) °C.

6. Equilibrate the sample for 1 min between the clamps, before the load is applied and measurement starts.

7. Add a pre-load of 0.5 N at a speed of 5 mm/min.

8. Extend the test specimen along its major axis at a constant traverse speed (20 mm/min) until the sample breaks.

During the test, the load sustained by the specimen is measured with a load cell of 200 N. The elongation is measured with a non-contact extensometer.

**Gel content**

The gel count was measured with a gel counting apparatus consisting of a measuring extruder, ME 25 / 5200 V1, 25*25D, with five temperature conditioning zones adjusted to a temperature profile of 170/180/190/190/190°C), an adapter and a slit die (with an opening of 0.5 * 150 mm). Attached to this were a chill roll unit (with a diameter of 13 cm with a temperature set of 50°C), a line camera (CCD 4096 pixel for dynamic digital processing of grey tone images) and a winding unit.

For the gel count content measurements the materials were extruded at a screw speed of 30 rounds per minute, a drawing speed of 3-3.5 m/min and a chill roll temperature of 50°C to make thin cast films with a thickness of 70 $\mu$m and a width of approximately 110 mm.

The resolution of the camera is 25 $\mu$m x 25 $\mu$m on the film. The camera works in transmission mode with a constant grey value (auto.set. margin level = 170). The system is able to decide between 256 grey values from black = 0 to white = 256. For detecting gels, a sensitivity level dark of 25% is used. For each material the average number of gel dots on a film surface area of 10 m$^2$ was inspected by the line camera. The line camera was set to differentiate the gel dot size according to the following:

Gel size (the size of the longest dimension of a gel)
300 $\mu$m to 599 $\mu$m
600 $\mu$m to 999 $\mu$m
above 1000 $\mu$m

**Film sample preparation**

The test films consisting of the inventive compositions and respective comparative compositions of 40 $\mu$m thickness, were prepared using a Collin 30 lab scale mono layer blown film line. The film samples were produced at 190 °C, a 1:2.5 blow-up ratio, frostline distance of 120 mm and an uptake speed of 7.6 m/min. Blending was done directly on the film extrusion line.

**Examples**

EP 4 516 852 B1

*Materials used:*

As mixed-plastic-polyethylene recycling blend (PERB) NAV 101 was used.

NAV 101 is a low density polyethylene (LDPE) post-consumer recyclate blend available from Ecoplast Kunststoffrecycling GmbH. The properties of NAV101 are shown in table B.

**Table B: Properties of NAV 101**

| | |
|---|---|
| Ethylene content (wt.-%) | 90.67 |
| isol. $C_3$ content (wt.-%) | 0 |
| $C_4$ content (wt.-%) | 2.23 |
| $C_6$ content (wt.-%) | 2.73 |
| $C_7$ content (wt.-%) | 0.48 |
| iPP content (wt.-%) | 3.89 |
| LDPE content (wt.-%) | 33.00 |
| Density (kg/m$^3$) | 923.9 |
| $MFR_2$ (g/10 min) | 1.02 |
| $MFR_5$ (g/10 min) | 3.57 |
| $MFR_{21}$ (g/10 min) | 41.56 |
| SHI 2.7/210 | 22.16 |
| eta 0.05 (Pa•s) | 16187 |
| eta 300 (Pa•s) | 618 |
| PI (s-1) | 1.46 |
| SH modulus (MPa) | 14.3 |
| Gel content (>1000 $\mu$m) (1/m$^2$) | 16.9 |
| Gel content (600-1000 $\mu$m) (1/m$^2$) | 175.1 |
| Gel content (300-599 $\mu$m) (1/m$^2$) | 885.9 |

**Blending polymers for the comparative examples**

CE1: Lumicene Supertough 40ST05 (40ST05), commercially available from Total, a metallocene MDPE (mMDPE) with a density of 940 kg/m$^3$, $MFR_2$ of 0.5 g/10 min, $MFR_5$ of 1.9 g/10 min and $MFR_{21}$ of 21.9 g/10 min.
CE2: **HDPE-4:** Borstar pilot plant with a 2-reactor set-up (loop1 - GPR 1) and prepolymerization.

**Catalyst**

For the inventive examples two ZN catalysts were used:

CAT. 1: as disclosed in EP2994506.
CAT. 2: Lynx 200, which is a commercially available Ziegler-Natta catalyst manufactured and supplied by Grace Catalysts Technologies.

**Polymerization**

**HDPE-1:** Borstar pilot plant with a 2-reactor set-up (loop1 - GPR 1) and prepolymerization.
**HDPE-2:** Borstar pilot plant with a 3-reactor set-up (loop1- - loop2 - GPR 1) and prepolymerization.
**HDPE-3:** Borstar pilot plant with a 3-reactor set-up (loop1- - loop2 - GPR 1) and prepolymerization.

22

**HDPE-4 for** CE2: Borstar pilot plant with a 2-reactor set-up (loop1 - GPR 1) and prepolymerization.

Multimodal HDPEs were produced using the polymerization conditions as given in Table 1.

## Table 1: Polymerization conditions for HDPE-1, HDPE-2, HDPE-3 and HDPE-4

| | HDPE-1 for IE1 | HDPE-2 for IE2 | HDPE-3 for IE3 | HDPE-4 for CE2 |
|---|---|---|---|---|
| **Catalyst** | CAT. 1 | CAT.2 | CAT.2 | CAT. 1 |
| **Prepoly loop reactor** | | | | |
| Temp. (°C) | 70 | 50 | 50 | 70 |
| Press. (kPa) | 5670 | 6500 | 6500 | 5700 |
| $H_2$ (g/h) | 2 | 2 | 2 | 5 |
| Split (wt.-%) | 1 | 1 | 1 | 1 |
| **Loop 1 Fraction (A-1) resp. component (A) for IE1** | | | | |
| Temp. (°C) | 95 | 95 | 95 | 95 |
| Press. (kPa) | 5400 | 6400 | 6400 | 5500 |
| $C_2$ conc. (mol%) | 5.9 | 2.7 | 3.1 | 3.5 |
| $H_2/C_2$ ratio (mol/kmol) | 357 | 680 | 755 | 430 |
| $C_4/C_2$ ratio (mol/kmol) | 8 | 0 | 0 | 0 |
| Split (wt.-%) | 44 | 20.5 | 21 | 48 |
| Density (kg/m³) of loop 1 material (fraction (A-1), respect. Component (A)) | 970 | 970 | 970 | 970 |
| $MFR_2$ (g/10 min) of loop 1 material (fraction (A-1), respect. Component (A)) | 400 | 250 | 265 | 350 |
| **Loop 2** | not in use | | | Not in use |
| Temp. (°C) | | 95 | 95 | |
| Press. (kPa) | | 6400 | 6400 | |
| $C_2$ conc. (mol%) | | 3.3 | 3.7 | |
| $H_2/C_2$ ratio (mol/kmol) | | 635 | 685 | |
| $C_4/C_2$ ratio (mol/kmol) | | 0 | 0 | |
| Split (wt.-%) | | 20.5 | 21 | |

| | | | |
|---|---|---|---|
| Density (kg/m$^3$) after loop 2 (component (A)) | | 971 | 971 | |
| MFR$_2$ (g/10 min) after loop 2 (component (A)) | | 305 | 320 | |
| MFR$_2$ (g/10 min) of loop 2 material (fraction (A-2)) | | 375 | 389 | |
| Density (kg/m$^3$) of loop 2 material (fraction (A-2)) | | 972 | 972 | |
| **GPR** | | | | |
| Temp. (°C) | 85 | 85 | 90 | 85 |
| Press. (kPa) | 1900 | 1900 | 1900 | 2000 |
| H$_2$/C$_2$ ratio (mol/kmol) | 35 | 24 | 41 | 110 |
| C$_4$/C$_2$ ratio (mol/kmol) | 183 | 98 | 35 | 25 |
| Split (wt.-%) | 55 | 58 | 57 | 51 |
| MFR$_2$ (g/10 min) of GPR material (Component (B)) | 0.00083 | 0.00014 | 0.00015 | 0.002 |
| Density (kg/m$^3$) of GPR material (Component (B)) | 924 | 928 | 939 | 941.6 |

The polymers were mixed with 0.05 wt.-% Irganox 1010 (BASF), 0.2 wt.-% Irgafos 168 (BASF) & 0.05 wt.-% CEASIT FI (Baerlocher) calcium stearate, where wt.-% are relative to total weight of the composition (the sum of HDPE powder + additive = 100 wt.-%) compounded and extruded on a ZSK 57 twin screw extruder. The melt temperature was 210 °C, production rate was 200 kg/h.

**Table 2: Material properties of the HDPEs and 40ST05**

| Material | HDPE-1 | HDPE-2 | HDPE-3 | 40ST05 | HDPE-4 |
|---|---|---|---|---|---|
| MFR$_2$ (g/10 min) | 0.30 | 0.06 | 0.07 | 0.50 | 0.80 |
| MFR$_5$ (g/10 min) | 1.1 | 0.24 | 0.23 | 1.9 | 2.8 |
| MFR$_{21}$ (g/10 min) | 22.9 | 6.0 | 6.0 | 21.9 | 47.4 |
| MFR$_{21}$/MFR$_5$ | 20.8 | 25.0 | 26.1 | 11.5 | 16.9 |
| Density (kg/m$^3$) | 945 | 946 | 952 | 940 | 955 |

**Monolayer blown films**

The above produced HDPEs (respectively the polymers used for the Comparative Examples) were blended with NAV 101 directly on the film extrusion line.
The following films were produced with the above-described method (film sample preparation).

**Table 3: Composition and properties of blown films**

| | | IE1 | IE2 | IE3 | CE1 | CE2 | CE3 |
|---|---|---|---|---|---|---|---|
| NAV 101 | wt.-% | 70 | 70 | 70 | 70 | 70 | 100 |
| HDPE-1 | wt.-% | 30 | | | | | |
| HDPE-2 | wt.-% | | 30 | | | | |
| HDPE-3 | wt.-% | | | 30 | | | |
| 40ST05 | wt.-% | | | | 30 | | |
| HDPE-4 | wt.-% | | | | | 30 | |
| TM/MD | MPa | 334 | 343 | 356 | 282 | 347 | 211 |

(continued)

| | | IE1 | IE2 | IE3 | CE1 | CE2 | CE3 |
|---|---|---|---|---|---|---|---|
| TM/TD | MPa | 413 | 447 | 454 | 341 | 412 | 250 |
| DDI | g | 98 | 88 | 81 | 68 | 69 | 100 |
| TM/DDI | MPa/g | 3.4 | 3.9 | 4.4 | 4.1 | 5.0 | 2.1 |

As can be seen from the above table, the films of the inventive examples show high toughness at comparable or enhanced stiffness relative to the comparative examples. Accordingly, they are characterized by a good stiffness/toughness ratio.

## Claims

1. A polyethylene composition comprising, based on the total weight of the polyethylene composition,

   (I) from 5.0 to 45.0 wt.-% of a multimodal high density polyethylene (HDPE) having

   i.1) a melt flow rate $MFR_5$ (ISO 1133, 190 °C, 5 kg) in the range of from 0.1 to 1.8 g/10 min,
   i.2) a Flow Rate Ratio (FRR) of $MFR_{21}/MFR_5$ (ISO 1133, 190 °C, 5 and 21.6 kg) in the range of from 15.0 to 30.0, and
   i.3) a density (ASTM D 792) in the range of from 942 to 954 $kg/m^3$, and

   (II) from 55.0 to 95.0 wt.-% of a mixed-plastic-polyethylene recycling blend (PERB) having

   ii.1) a melt flow rate $MFR_2$ (ISO 1133, 190 °C, 2.16 kg) in the range of from 0.1 to 1.2 g/10 min,
   ii.2) a density (ASTM D 792) in the range of from 910 to 945 $kg/m^3$, and
   ii.3) a total amount of ethylene units ($C_2$ units), based on the total weight of monomer units in the mixed-plastic-polyethylene recycling blend (PERB) and measured according to quantitative $^{13}C\{^1H\}$ NMR as described in the specification, in the range of from 80.0 to 96.0 wt.-%.

2. The polyethylene composition according to claim 1, wherein the multimodal HDPE has

   a) a melt flow rate $MFR_5$ (ISO 1133, 190 °C, 5 kg) in the range of from 0.1 to 1.7 g/10 min, preferably from 0.2 to 1.5 g/10 min and more preferably from 0.2 to 1.3 g/10 min, and/or
   b) a melt flow rate $MFR_{21}$ (ISO 1133, 190 °C, 21.6 kg) in the range of from 3.0 to 26.0 g/10 min, preferably from 4.0 to 25.0 g/10 min and more preferably from 5.0 to 24.0 g/10 min, and/or
   c) a Flow Rate Ratio (FRR) of $MFR_{21}/MFR_5$ (ISO 1133, 190 °C, 5 and 21.6 kg) in the range of from 17.0 to 29.0, preferably from 18.0 to 28.0 and more preferably from 19.0 to 27.0.

3. The polyethylene composition according to claim 1 or 2, wherein the multimodal HDPE comprises a polyethylene component (A) and a polyethylene component (B), wherein the polyethylene component (A) is an ethylene homopolymer and the polyethylene component (B) is an ethylene copolymer with comonomer units of 1-butene, 1-hexene or 1-octene, preferably 1-butene.

4. The polyethylene composition according to claim 3, wherein

   a) the polyethylene component (A) has

   a1) a melt flow rate $MFR_2$ (ISO 1133, 190 °C, 2.16 kg) in the range of from 200 to 600 g/10 min, preferably from 250 to 550 g/10 min, more preferably from 300 to 500 g/10 min and still more preferably from 350 to 450 g/10 min, and/or
   a2) a density (ASTM D 792) in the range of from 960 to 980 $kg/m^3$, preferably from 962 to 978 $kg/m^3$ and more preferably from 965 to 975 $kg/m^3$, and/or

   b) the polyethylene component (B) has

b1) a melt flow rate $MFR_2$ (ISO 1133, 190 °C, 2.16 kg) in the range of from 0.00005 to 0.05 g/10 min, preferably from 0.0001 to 0.01 g/10 min and more preferably from 0.0002 to 0.005 g/10 min, and/or
b2) a density (ASTM D 792) in the range of from 910 to 940 kg/m$^3$ and preferably from 915 to 935 kg/m$^3$.

5. The polyethylene composition according to claim 1 or 2, wherein the multimodal HDPE comprises a polyethylene component (A) and a polyethylene component (B), wherein the polyethylene component (A) is an ethylene homopolymer and the polyethylene component (B) is an ethylene copolymer with comonomer units of 1-butene, 1-hexene or 1-octene, preferably 1-butene, wherein the polyethylene component (A) comprises, preferably consists of, a first ethylene homopolymer fraction (A-1) and a second ethylene homopolymer fraction (A-2).

6. The polyethylene composition according to claim 5, wherein

   a) the polyethylene component (A) has

      a1) a melt flow rate $MFR_2$ (ISO 1133, 190 °C, 2.16 kg) in the range of from 150 to 500 g/10 min, preferably from 200 to 450 g/10 min, more preferably from 220 to 400 g/10 min and still more preferably from 250 to 380 g/10 min, and/or
      a2) a density (ASTM D 792) in the range of from 960 to 980 kg/m$^3$, preferably from 962 to 978 kg/m$^3$ and more preferably from 965 to 975 kg/m$^3$, and/or

   b) the polyethylene component (B) has

      b1) a melt flow rate $MFR_2$ (ISO 1133, 190 °C, 2.16 kg) in the range of from 0.00001 to 0.01 g/10 min, preferably from 0.00002 to 0.005 g/10 min and more preferably from 0.00005 to 0.001 g/10 min, and/or
      b2) a density (ASTM D 792) in the range of from 915 to 950 kg/m$^3$ and preferably from 920 to 945 kg/m$^3$,

   wherein, in the polyethylene component (A), the first ethylene homopolymer fraction (A-1) has a lower melt flow rate $MFR_2$, preferably lower by 50 to 500 g/10 min, than the second ethylene homopolymer fraction (A-2).

7. The polyethylene composition according to any one of the preceding claims, wherein the multimodal HDPE is produced in a two-stage or tree-stage polymerization process using a Ziegler Natta catalyst system.

8. The polyethylene composition according to any one of the preceding claims, wherein the mixed-plastic-polyethylene recycling blend (PERB) comprises, based on the total weight of monomer units in the mixed-plastic-polyethylene recycling blend (PERB) and measured according to quantitative $^{13}$C{$^1$H} NMR as described in the specification,

   a) a total amount of ethylene units ($C_2$ units) in the range of from 80.0 to 96.0 wt.-%, preferably from 82.5 to 95.5 wt.-%, more preferably from 85.0 to 95.5 wt.-% and most preferably of from 87.5 to 95.0 wt.-%, and/or
   b) a total amount of continuous units having 3 carbon atoms corresponding to polypropylene (continuous $C_3$ units) in the range of from 0.2 to 6.5 wt.-%, preferably from 0.4 to 6.0 wt.-%, more preferably from 0.6 to 5.5 wt.-% and most preferably from 0.75 to 5.0 wt.-%.

9. The polyethylene composition according to any one of the preceding claims, wherein the mixed-plastic-polyethylene recycling blend (PERB) comprises at least one, preferably all, of the features a) to e), based on the total weight of monomer units in the mixed-plastic-polyethylene recycling blend (PERB) and measured according to quantitative $^{13}$C{$^1$H} NMR as described in the specification,

   a) a total amount of units having 3 carbon atoms as isolated $C_3$ units (isolated $C_3$ units) in the range of from 0.00 to 0.50 wt.-%, preferably from 0.00 to 0.40 wt.-%, more preferably from 0.00 to 0.30 wt.-% and most preferably from 0.00 to 0.25 wt.-%,
   b) a total amount of units having 4 carbon atoms ($C_4$ units) in the range of from 0.50 to 5.00 wt.-%, preferably from 0.75 to 4.00 wt.-%, still more preferably from 1.00 to 3.50 wt.-% and most preferably from 1.25 to 3.00 wt.-%,
   c) a total amount of units having 6 carbon atoms ($C_6$ units) in the range of from 0.50 to 7.50 wt.-%, preferably from 0.75 to 6.50 wt.-%, more preferably from 1.00 to 5.50 wt.-% and most preferably from 1.25 to 5.00 wt.-%,
   d) a total amount of units having 7 carbon atoms ($C_7$ units) in the range of from 0.20 to 2.50 wt.-%, preferably from 0.30 to 2.00 wt.-%, more preferably from 0.40 to 1.50 wt.-% and most preferably from 0.45 to 1.25 wt.-%, and
   e) an LDPE content in the range of from 20.0 to 65.0 wt.-%, preferably from 25.0 to 62.5 wt.-%, more preferably from 30.0 to 60.0 wt.-% and most preferably from 32.0 to 55.0 wt.-%.

10. The polyethylene composition according to any one of the preceding claims, wherein the mixed-plastic-polyethylene recycling blend (PERB) has

 a) a melt flow rate $MFR_2$ (ISO 1133, 2.16 kg, 190 °C) in the range of 0.2 to 1.1 g/10 min, and/or
 b) a density (ASTM D 792) in the range of from 915 to 942 $kg/m^3$, preferably from 918 to 940 $kg/m^3$.

11. The polyethylene composition according to any one of the preceding claims, wherein the composition, based on the total weight of the polyethylene composition, comprises, preferably consists of,

 (I) from 10.0 to 45.0 wt.-%, preferably 20.0 to 40.0 wt.-%, of the multimodal high density polyethylene (HDPE),
 (II) from 55.0 to 90.0 wt.-%, preferably 60.0 to 80.0 wt.-%, of the mixed-plastic-polyethylene recycling blend (PERB), and
 (III) optional additives.

12. A film comprising the polyethylene composition according to any one of the preceding claims 1 to 11.

13. The film according to claim 12, wherein the film is **characterized by** at least one, preferably all, of the following properties, determined on a 40 μm test blown film:

 a) a Tensile Modulus (TM) in machine direction (MD) (ISO 527-3, 23 °C) of at least 290 MPa, preferably in the range of from 290 to 600 MPa,
 b) a Dart Drop Impact (DDI) (ISO 7765-1:1988) of more than 70 g, preferably in the range of from 71 to 100 g, and
 c) a TM(MD)/DDI ratio of less than 5 MPa/g, preferably in the range of from 2.5 to 4.9 MPa/g.

14. Use of a film according to any one of the preceding claims 12 and 13 as packaging material, preferably for non-food products.

15. Use of a multimodal high density polyethylene (HDPE) having

 i.1) a melt flow rate $MFR_5$ (ISO 1133, 190 °C, 5 kg) in the range of from 0.1 to 1.8 g/10 min,
 i.2) a Flow Rate Ratio (FRR) of $MFR_{21}/MFR_5$ (ISO 1133, 190 °C, 5 and 21.6 kg) in the range of from 15.0 to 30.0, and
 i.3) a density (ASTM D 792) in the range of from 942 to 954 $kg/m^3$

for modifying mechanical properties of a mixed-plastic-polyethylene recycling blend (PERB).

**Patentansprüche**

1. Polyethylenzusammensetzung, umfassend, bezogen auf das Gesamtgewicht der Polyethylenzusammensetzung,

 (I) von 5,0 bis 45,0 Gew.-% ein multimodales Polyethylen hoher Dichte (HDPE), das folgendes aufweist:

  i.1) eine Schmelzflussrate $MFR_5$ (ISO 1133, 190 °C, 5 kg) im Bereich von 0,1 bis 1,8 g/10 min,
  i.2) ein Flussratenverhältnis (FRR) von $MFR_{21}/MFR_5$ (ISO 1133, 190 °C, 5 und 21,6 kg) im Bereich von 15,0 bis 30,0 und
  i.3) eine Dichte (ASTM D 792) im Bereich von 942 bis 954 $kg/m^3$, und

 (II) von 55,0 bis 95,0 Gew.-% eine Recyclingmischung aus gemischten Kunststoffen und Polyethylen (PERB), die folgendes aufweist:

  ii.1) eine Schmelzflussrate $MFR_2$ (ISO 1133, 190 °C, 2,16 kg) im Bereich von 0,1 bis 1,2 g/10 min,
  ii.2) eine Dichte (ASTM D 792) im Bereich von 910 bis 945 $kg/m^3$, und
  ii.3) eine Gesamtmenge an Ethylen-Einheiten ($C_2$-Einheiten), bezogen auf das Gesamtgewicht der Monomer-Einheiten in der Recyclingmischung aus gemischten Kunststoffen und Polyethylen (PERB) und gemessen gemäß quantitativer $^{13}C\{^1H\}$ NMR, wie in der Beschreibung angegeben, im Bereich von 80,0 bis 96,0 Gew.-%.

2. Polyethylenzusammensetzung nach Anspruch 1, wobei das multimodale HDPE folgendes aufweist:

a) eine Schmelzflussrate $MFR_5$ (ISO 1133, 190 °C, 5 kg) im Bereich von 0,1 bis 1,7 g/10 min, vorzugsweise von 0,2 bis 1,5 g/10 min und noch bevorzugter von 0,2 bis 1,3 g/10 min, und/oder
b) eine Schmelzflussrate $MFR_{21}$ (ISO 1133, 190 °C, 21,6 kg) im Bereich von 3,0 bis 26,0 g/10 min, vorzugsweise von 4,0 bis 25,0 g/10 min und noch bevorzugter von 5,0 bis 24,0 g/10 min, und/oder
c) ein Flussratenverhältnis (FRR) von $MFR_{21}/MFR_5$ (ISO 1133, 190 °C, 5 und 21,6 kg) im Bereich von 17,0 bis 29,0, vorzugsweise von 18,0 bis 28,0 und noch bevorzugter von 19,0 bis 27,0.

3. Polyethylenzusammensetzung nach Anspruch 1 oder 2, wobei das multimodale HDPE eine Polyethylen-Komponente (A) und eine Polyethylen-Komponente (B) umfasst, wobei die Polyethylen-Komponente (A) ein Ethylen-Homopolymer ist und die Polyethylen-Komponente (B) ein Ethylen-Copolymer mit Comonomer-Einheiten aus 1-Buten, 1-Hexen oder 1-Octen, vorzugsweise 1-Buten ist.

4. Polyethylenzusammensetzung nach Anspruch 3, wobei

a) die Polyethylenkomponente (A) folgendes aufweist:

a1) eine Schmelzflussrate $MFR_2$ (ISO 1133, 190 °C, 2,16 kg) im Bereich von 200 bis 600 g/10 min, vorzugsweise von 250 bis 550 g/10 min, noch bevorzugter von 300 bis 500 g/10 min und am meisten bevorzugt von 350 bis 450 g/10 min, und/oder
a2) eine Dichte (ASTM D 792) im Bereich von 960 bis 980 kg/m$^3$, vorzugsweise von 962 bis 978 kg/m$^3$ und noch bevorzugter von 965 bis 975 kg/m$^3$, und/oder

b) die Polyethylenkomponente (B) folgendes aufweist:

b1) eine Schmelzflussrate $MFR_2$ (ISO 1133, 190 °C, 2,16 kg) im Bereich von 0,00005 bis 0,05 g/10 min, vorzugsweise von 0,0001 bis 0,01 g/10 min und noch bevorzugter von 0,0002 bis 0,005 g/10 min, und/oder
b2) eine Dichte (ASTM D 792) im Bereich von 910 bis 940 kg/m$^3$ und vorzugsweise von 915 bis 935 kg/m$^3$.

5. Polyethylenzusammensetzung nach Anspruch 1 oder 2, wobei das multimodale HDPE eine Polyethylen-Komponente (A) und eine Polyethylen-Komponente (B) umfasst, wobei die Polyethylen-Komponente (A) ein Ethylen-Homopolymer ist und die Polyethylen-Komponente (B) ein Ethylen-Copolymer mit Comonomer-Einheiten aus 1-Buten, 1-Hexen oder 1-Octen, vorzugsweise 1-Buten ist, wobei die Polyethylenkomponente (A) eine erste Ethylenhomopolymerfraktion (A-1) und eine zweite Ethylenhomopolymerfraktion (A-2) umfasst, vorzugsweise daraus besteht.

6. Polyethylenzusammensetzung nach Anspruch 5, wobei

a) die Polyethylenkomponente (A) folgendes aufweist:

a1) eine Schmelzflussrate $MFR_2$ (ISO 1133, 190 °C, 2,16 kg) im Bereich von 150 bis 500 g/10 min, vorzugsweise von 200 bis 450 g/10 min, noch bevorzugter von 220 bis 400 g/10 min und am meisten bevorzugt von 250 bis 380 g/10 min, und/oder
a2) eine Dichte (ASTM D 792) im Bereich von 960 bis 980 kg/m$^3$, vorzugsweise von 962 bis 978 kg/m$^3$ und noch bevorzugter von 965 bis 975 kg/m$^3$, und/oder

b) die Polyethylenkomponente (B) folgendes aufweist:

b1) eine Schmelzflussrate $MFR_2$ (ISO 1133, 190 °C, 2,16 kg) im Bereich von 0,00001 bis 0,01 g/10 min, vorzugsweise von 0,00002 bis 0,005 g/10 min und noch bevorzugter von 0,00005 bis 0,001 g/10 min, und/oder
b2) eine Dichte (ASTM D 792) im Bereich von 915 bis 950 kg/m$^3$ und vorzugsweise von 920 bis 945 kg/m$^3$,

wobei in der Polyethylenkomponente (A) die erste Ethylenhomopolymerfraktion (A-1) eine niedrigere Schmelzflussrate $MFR_2$, vorzugsweise um 50 bis 500 g/10 min niedriger, aufweist als die zweite Ethylenhomopolymerfraktion (A-2).

7. Polyethylenzusammensetzung nach einem der vorstehenden Ansprüche, wobei das multimodale HDPE in einem zweistufigen oder dreistufigen Polymerisationsverfahren unter Verwendung eines Ziegler-Natta-Katalysatorsystems hergestellt wird.

8. Polyethylenzusammensetzung nach einem der vorstehenden Ansprüche, wobei die Recyclingmischung aus gemischten Kunststoffen und Polyethylen (PERB), bezogen auf das Gesamtgewicht der Monomer-Einheiten in der Recyclingmischung aus gemischten Kunststoffen und Polyethylen (PERB) und gemessen gemäß quantitativer $^{13}$C {$^{1}$H} NMR, wie in der Beschreibung angegeben, folgendes umfasst:

   a) eine Gesamtmenge an Ethylen-Einheiten (C$_2$-Einheiten) im Bereich von 80,0 bis 96,0 Gew.-%, vorzugsweise von 82,5 bis 95,5 Gew.-%, noch bevorzugter von 85,0 bis 95,5 Gew.-% und am meisten bevorzugt von 87,5 bis 95,0 Gew.-%, und/oder

   b) eine Gesamtmenge an durchgehenden Einheiten mit 3 Kohlenstoffatomen, die Polypropylen entsprechen (durchgehende C$_3$-Einheiten), im Bereich von 0,2 bis 6,5 Gew.-%, vorzugsweise von 0,4 bis 6,0 Gew.-%, noch bevorzugter von 0,6 bis 5,5 Gew.-% und am meisten bevorzugt von 0,75 bis 5,0 Gew.-%.

9. Polyethylenzusammensetzung nach einem der vorstehenden Ansprüche, wobei die Recyclingmischung aus gemischten Kunststoffen und Polyethylen (PERB) mindestens eines, vorzugsweise alle, der folgenden Merkmale a) bis e) aufweist, bezogen auf das Gesamtgewicht der Monomer-Einheiten in der Recyclingmischung aus gemischten Kunststoffen und Polyethylen (PERB) und gemessen gemäß quantitativer $^{13}$C{$^{1}$H} NMR, wie in der Beschreibung angegeben,

   a) eine Gesamtmenge an Einheiten mit 3 Kohlenstoffatomen als isolierte C$_3$-Einheiten (isolierte C$_3$-Einheiten) im Bereich von 0,00 bis 0,50 Gew.-%, vorzugsweise von 0,00 bis 0,40 Gew.-%, noch bevorzugter von 0,00 bis 0,30 Gew.-% und am meisten bevorzugt von 0,00 bis 0,25 Gew.-%,

   b) eine Gesamtmenge an Einheiten mit 4 Kohlenstoffatomen (C$_4$-Einheiten) im Bereich von 0,50 bis 5,00 Gew.-%, vorzugsweise von 0,75 bis 4,00 Gew.-%, noch bevorzugter von 1,00 bis 3,50 Gew.-% und am meisten bevorzugt von 1,25 bis 3,00 Gew.-%,

   c) eine Gesamtmenge an Einheiten mit 6 Kohlenstoffatomen (C$_6$-Einheiten) im Bereich von 0,50 bis 7,50 Gew.-%, vorzugsweise von 0,75 bis 6,50 Gew.-%, noch bevorzugter von 1,00 bis 5,50 Gew.-% und am meisten bevorzugt von 1,25 bis 5,00 Gew.-%,

   d) eine Gesamtmenge an Einheiten mit 7 Kohlenstoffatomen (C$_7$-Einheiten) im Bereich von 0,20 bis 2,50 Gew.-%, vorzugsweise von 0,30 bis 2,00 Gew.-%, noch bevorzugter von 0,40 bis 1,50 Gew.-% und am meisten bevorzugt von 0,45 bis 1,25 Gew.-%, und

   e) einen LDPE-Gehalt im Bereich von 20,0 bis 65,0 Gew.-%, vorzugsweise von 25,0 bis 62,5 Gew.-%, noch bevorzugter von 30,0 bis 60,0 Gew.-% und am meisten bevorzugt von 32,0 bis 55,0 Gew.-%.

10. Polyethylenzusammensetzung nach einem der vorstehenden Ansprüche, wobei die Recyclingmischung aus gemischten Kunststoffen und Polyethylen (PERB) folgendes aufweist:

   a) eine Schmelzflussrate MFR$_2$ (ISO 1133, 2,16 kg, 190 °C) im Bereich von 0,2 bis 1,1 g/10 min und/oder

   b) eine Dichte (ASTM D 792) im Bereich von 915 bis 942 kg/m$^3$, vorzugsweise von 918 bis 940 kg/m$^3$.

11. Polyethylenzusammensetzung nach einem der vorstehenden Ansprüche, wobei die Zusammensetzung, bezogen auf das Gesamtgewicht der Polyethylenzusammensetzung, folgendes umfasst, vorzugsweise aus folgendem besteht,

   (I) von 10,0 bis 45,0 Gew.-%, vorzugsweise 20,0 bis 40,0 Gew.-%, das multimodale Polyethylen hoher Dichte (HDPE),

   (II) von 55,0 bis 90,0 Gew.-%, vorzugsweise 60,0 bis 80,0 Gew.-%, die Recyclingmischung aus gemischten Kunststoffen und Polyethylen (PERB) und

   (III) optionale Additive.

12. Folie, die die Polyethylenzusammensetzung nach einem der vorstehenden Ansprüche 1 bis 11 umfasst.

13. Folie nach Anspruch 12, wobei die Folie durch mindestens eine, vorzugsweise alle der folgenden Eigenschaften gekennzeichnet ist, bestimmt an einer 40 μm Testblasfolie:

a) ein Zugmodul (TM) in Maschinenrichtung (MD) (ISO 527-3, 23 °C) von mindestens 290 MPa, vorzugsweise im Bereich von 290 bis 600 MPa,

b) eine Dart-Drop-Schlagfestigkeit (DDI) (ISO 7765-1:1988) von mehr als 70 g, vorzugsweise im Bereich von 71 bis 100 g, und

c) ein TM(MD)/DDI-Verhältnis von weniger als 5 MPa/g, vorzugsweise im Bereich von 2,5 bis 4,9 MPa/g.

14. Verwendung einer Folie nach einem der vorstehenden Ansprüche 12 und 13 als Verpackungsmaterial, vorzugsweise für Nichtlebensmittelprodukte.

15. Verwendung eines multimodalen Polyethylens hoher Dichte (HDPE), das folgendes aufweist:

i.1) eine Schmelzflussrate $MFR_5$ (ISO 1133, 190 °C, 5 kg) im Bereich von 0,1 bis 1,8 g/10 min,

i.2) ein Flussratenverhältnis (FRR) von $MFR_{21}/MFR_5$ (ISO 1133, 190 °C, 5 und 21,6 kg) im Bereich von 15,0 bis 30,0 und

i.3) eine Dichte (ASTM D 792) im Bereich von 942 bis 954 $kg/m^3$

zur Modifikation der mechanischen Eigenschaften einer Recyclingmischung aus gemischten Kunststoffen und Polyethylen (PERB).

**Revendications**

1. Composition de polyéthylène comprenant, par rapport au poids total de la composition de polyéthylène,

(I) de 5,0 à 45,0 % en poids d'un polyéthylène haute densité (HDPE) multimodal ayant

i.1) un indice de fluidité à chaud $MFR_5$ (ISO 1133, 190 °C, 5 kg) dans la plage de 0,1 à 1,8 g/10 min,

i.2) un rapport de débit (FRR) de $MFR_{21}/MFR_5$ (ISO 1133, 190 °C, 5 et 21,6 kg) dans la plage de 15,0 à 30,0, et

i.3) une masse volumique (ASTM D 792) dans la plage de 942 à 954 $kg/m^3$, et

(II) de 55,0 à 95,0 % en poids d'un mélange de recyclage de polyéthylène à base de plastiques mélangés (PERB) ayant

ii.1) un indice de fluidité à chaud $MFR_2$ (ISO 1133, 190 °C, 2,16 kg) dans la plage de 0,1 à 1,2 g/10 min,

ii.2) une masse volumique (ASTM D 792) dans la plage de 910 à 945 $kg/m^3$, et

ii.3) une quantité totale de motifs éthylène (motifs C2), par rapport au poids total des motifs monomères dans le mélange de recyclage de polyéthylène à base de plastiques mélangés (PERB) et mesurée par RMN $^{13}$C {$^1$H} quantitative comme détaillé dans la description, dans la plage de 80,0 à 96,0 % en poids.

2. Composition de polyéthylène selon la revendication 1, dans laquelle le HDPE multimodal a

a) un indice de fluidité à chaud $MFR_5$ (ISO 1133, 190 °C, 5 kg) dans la plage de 0,1 à 1,7 g/10 min, de préférence de 0,2 à 1,5 g/10 min et plus préférentiellement de 0,2 à 1,3 g/10 min, et/ou

b) un indice de fluidité à chaud $MFR_{21}$ (ISO 1133, 190 °C, 21,6 kg) dans la plage de 3,0 à 26,0 g/10 min, de préférence de 4,0 à 25,0 g/10 min et plus préférentiellement de 5,0 à 24,0 g/10 min, et/ou

c) un rapport de débit (FRR) de $MFR_{21}/MFR_5$ (ISO 1133, 190 °C, 5 et 21,6 kg) dans la plage de 17,0 à 29,0, de préférence de 18,0 à 28,0 et plus préférentiellement de 19,0 à 27,0.

3. Composition de polyéthylène selon la revendication 1 ou 2, dans laquelle le HDPE multimodal comprend un constituant polyéthylène (A) et un constituant polyéthylène (B), dans laquelle le constituant polyéthylène (A) est un homopolymère d'éthylène et le constituant polyéthylène (B) est un copolymère d'éthylène avec des motifs comonomères de 1-butène, 1-hexène ou 1-octène, de préférence de 1-butène.

4. Composition de polyéthylène selon la revendication 3, dans laquelle

a) le constituant polyéthylène (A) a

a1) un indice de fluidité à chaud $MFR_2$ (ISO 1133, 190 °C, 2,16 kg) dans la plage de 200 à 600 g/10 min, de préférence de 250 à 550 g/10 min, plus préférentiellement de 300 à 500 g/10 min et encore plus préférentiellement de 350 à 450 g/10 min, et/ou

a2) une masse volumique (ASTM D 792) dans la plage de 960 à 980 kg/m$^3$, de préférence de 962 à 978 kg/m$^3$ et plus préférentiellement de 965 à 975 kg/m$^3$, et/ou

b) le constituant polyéthylène (B) a

b1) un indice de fluidité à chaud MFR$_2$ (ISO 1133, 190 °C, 2,16 kg) dans la plage de 0,00005 à 0,05 g/10 min, de préférence de 0,0001 à 0,01 g/10 min et plus préférentiellement de 0,0002 à 0,005 g/10 min, et/ou

b2) une masse volumique (ASTM D 792) dans la plage de 910 à 940 kg/m$^3$ et de préférence de 915 à 935 kg/m$^3$.

5.  Composition de polyéthylène selon la revendication 1 ou 2, dans laquelle le HDPE multimodal comprend un constituant polyéthylène (A) et un constituant polyéthylène (B), dans laquelle le constituant polyéthylène (A) est un homopolymère d'éthylène et le constituant polyéthylène (B) est un copolymère d'éthylène avec des motifs comonomères de 1-butène, 1-hexène ou 1-octène, de préférence de 1-butène, dans laquelle le constituant polyéthylène (A) comprend, de préférence est constitué de, une première fraction homopolymère d'éthylène (A-1) et une seconde fraction homopolymère d'éthylène (A-2).

6.  Composition de polyéthylène selon la revendication 5, dans laquelle

    a) le constituant polyéthylène (A) a

    a1) un indice de fluidité à chaud MFR$_2$ (ISO 1133, 190 °C, 2,16 kg) dans la plage de 150 à 500 g/10 min, de préférence de 200 à 450 g/10 min, plus préférentiellement de 220 à 400 g/10 min et encore plus préférentiellement de 250 à 380 g/10min, et/ou

    a2) une masse volumique (ASTM D 792) dans la plage de 960 à 980 kg/m$^3$, de préférence de 962 à 978 kg/m$^3$ et plus préférentiellement de 965 à 975 kg/m$^3$, et/ou

    b) le constituant polyéthylène (B) a

    b1) un indice de fluidité à chaud MFR$_2$ (ISO 1133, 190 °C, 2,16 kg) dans la plage de 0,00001 à 0,01 g/10 min, de préférence de 0,00002 à 0,005 g/10 min et plus préférentiellement de 0,00005 à 0,001 g/10 min, et/ou

    b2) une masse volumique (ASTM D 792) dans la plage de 915 à 950 kg/m$^3$ et de préférence de 920 à 945 kg/m$^3$,

    dans laquelle, dans le constituant polyéthylène (A), la première fraction homopolymère d'éthylène (A-1) a un indice de fluidité à chaud MFR$_2$ inférieur, de préférence inférieur de 50 à 500 g/10 min, à celui de la seconde fraction homopolymère d'éthylène (A-2).

7.  Composition de polyéthylène selon l'une quelconque des revendications précédentes, dans laquelle le HDPE multimodal est produit dans un processus de polymérisation en deux étapes ou en trois étapes en utilisant un système catalytique de Ziegler-Natta.

8.  Composition de polyéthylène selon l'une quelconque des revendications précédentes, dans laquelle le mélange de recyclage de polyéthylène à base de plastiques mélangés (PERB) comprend, par rapport au poids total de motifs monomères dans le mélange de recyclage de polyéthylène à base de plastiques mélangés (PERB) et mesurées par une RMN $^{13}$C{$^1$H} quantitative comme détaillé dans la description,

    a) une quantité totale de motifs éthylène (motifs C$_2$) dans la plage de 80,0 à 96,0 % en poids, de préférence de 82,5 à 95,5 % en poids, plus préférentiellement de 85,0 à 95,5 % en poids et le plus préférentiellement de 87,5 à 95,0 % en poids, et/ou

    a) une quantité totale de motifs continus ayant 3 atomes de carbone correspondant au polypropylène (motifs C$_3$ continus) dans la plage de 0,2 à 6,5 % en poids, de préférence de 0,4 à 6,0 % en poids, plus préférentiellement de 0,6 à 5,5 % en poids et le plus préférentiellement de 0,75 à 5,0 % en poids.

9.  Composition de polyéthylène selon l'une quelconque des revendications précédentes, dans laquelle le mélange de recyclage de polyéthylène à base de plastiques mélangés (PERB) comprend au moins une, de préférence toute, les caractéristiques a) à e), par rapport au poids total de motifs monomères dans le mélange de recyclage de polyéthylène à base de plastiques mélangés (PERB) et mesurées conformément à une RMN $^{13}C\{^1H\}$ quantitative comme détaillé dans la description,

a) une quantité totale de motifs ayant 3 atomes de carbone en tant que motifs $C_3$ isolés (motifs $C_3$ isolés) dans la plage de 0,00 à 0,50 % en poids, de préférence de 0,00 à 0,40 % en poids, plus préférentiellement de 0,00 à 0,30 % en poids et le plus préférentiellement de 0,00 à 0,25 % en poids,

b) une quantité totale de motifs ayant 4 atomes de carbone (motifs $C_4$) dans la plage de 0,50 à 5,00 % en poids, de préférence de 0,75 à 4,00 % en poids, encore plus préférentiellement de 1,00 à 3,50 % en poids et le plus préférentiellement de 1,25 à 3,00 % en poids,

c) une quantité totale de motifs ayant 6 atomes de carbone (motifs $C_6$) dans la plage de 0,50 à 7,50 % en poids, de préférence de 0,75 à 6,50 % en poids, plus préférentiellement de 1,00 à 5,50 % en poids et le plus préférentiellement de 1,25 à 5,00 % en poids,

d) une quantité totale de motifs ayant 7 atomes de carbone (motifs $C_7$) dans la plage de 0,20 à 2,50 % en poids, de préférence de 0,30 à 2,00 % en poids, plus préférentiellement de 0,40 à 1,50 % en poids et le plus préférentiellement de 0,45 à 1,25 % en poids, et

a) une teneur en LDPE dans la plage de 20,0 à 65,0 % en poids, de préférence de 25,0 à 62,5 % en poids, plus préférentiellement de 30,0 à 60,0 % en poids et le plus préférentiellement de 32,0 à 55,0 % en poids.

10. Composition de polyéthylène selon l'une quelconque des revendications précédentes, dans laquelle le mélange de recyclage de polyéthylène à base de plastiques mélangés (PERB) a

a) un indice de fluidité à chaud $MFR_2$ (ISO 1133, 2,16 kg, 190 °C) dans la plage de 0,2 à 1,1 g/10 min, et/ou

b) une masse volumique (ASTM D 792) dans la plage de 915 à 942 kg/m$^3$, de préférence de 918 à 940 kg/m$^3$.

11. Composition de polyéthylène selon l'une quelconque des revendications précédentes, dans laquelle la composition, par rapport au poids total de la composition de polyéthylène, comprend, de préférence est constituée de,

(I) de 10,0 à 45,0 % en poids, de préférence de 20,0 à 40,0 % en poids, du polyéthylène haute densité (HDPE) multimodal,

(II) de 55,0 à 90,0 % en poids, de préférence de 60,0 à 80,0 % en poids, du mélange de recyclage de polyéthylène à base de plastiques mélangés (PERB), et

(III) des additifs facultatifs.

12. Film comprenant la composition de polyéthylène selon l'une quelconque des revendications 1 à 11 précédentes.

13. Film selon la revendication 12, dans lequel le film est **caractérisé par** au moins une, préférentiellement toutes, les propriétés suivantes, déterminées sur un film soufflé d'essai de 40 $\mu$m :

a) un module de traction (MT) dans la direction de la machine (DM) (ISO 527-3, 23 °C) d'au moins 290 MPa, de préférence dans la plage de 290 à 600 MPa,

b) un impact de chute de projectile (DDI) (ISO 7765-1:1988) de plus de 70 g, de préférence dans la plage de 71 à 100 g, et

c) un rapport MT(DM)/DDI de moins de 5 MPa/g, de préférence dans la plage de 2,5 à 4,9 MPa/g.

14. Utilisation d'un film selon l'une quelconque des revendications 12 et 13 précédentes en tant que matériau d'emballage, de préférence pour des produits non alimentaires.

15. Utilisation d'un polyéthylène haute densité (HDPE) multimodal ayant

i.1) un indice de fluidité à chaud $MFR_5$ (ISO 1133, 190 °C, 5 kg) dans la plage de 0,1 à 1,8 g/10 min,

i.2) un rapport de débit (FRR) de $MFR_{21}/MFR_5$ (ISO 1133, 190 °C, 5 et 21,6 kg) dans la plage de 15,0 à 30,0, et

i.3) une masse volumique (ASTM D 792) dans la plage de 942 à 954 kg/m$^3$

dans la modification des propriétés mécaniques d'un mélange de recyclage de polyéthylène à base de plastiques mélangés (PERB).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021122299 A
- WO 2020207940 A1
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A

- EP 1591460 A
- WO 2007025640 A
- WO 9619503 A
- WO 9632420 A
- EP 1378528 A
- WO 2016198273 A
- WO 2021009189 A
- WO 2021009190 A
- WO 2021009191 A
- WO 2021009192 A
- EP 2994506 A

**Non-patent literature cited in the description**

- *IUPAC, Nomenclature of Inorganic Chemistry*, 1989
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (S1), S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251

- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253
- **SINGH, G.** ; **KOTHARI, A.** ; **GUPTA, V.** *Polymer Testing*, 2009, vol. 28 (5), 475
- **J. RANDALL**. *Macromol. Sci., Rev. Macromol. Chem. Phys.*, 1989, vol. C29, 201
- **A. J. BRANDOLINI** ; **D. D. HILLS**. NMR Spectra of Polymers and Polymer Additives. Marcel Dekker Inc., 2000
- **HEINO, E.L.** ; **LEHTINEN, A.** ; **TANNER J.** ; **SEPPÄLÄ, J.** Rheological characterization of polyethylene fractions. *Theor. Appl. Rheol., Proc. Int. Congr. Rheol, 11th*, 1992, vol. 1, 360-362
- **HEINO, E.L.** ; **BOREALIS**. The influence of molecular structure on some rheological properties of polyethylene. *Annual Transactions of the Nordic Rheology Society*, 1995
- Definition of terms relating to the non-ultimate mechanical properties of polymers. *Pure & Appl. Chem.*, 1998, vol. 70 (3), 701-754